# EUROPÄISCHE PATENTSCHRIFT

(11) **EP 3 362 332 B1**
(45) Veröffentlichungstag und Bekanntmachung des Hinweises auf die Patenterteilung: **09.06.2021**
(21) Anmeldenummer: 16778842.1
(22) Anmeldetag: 11.10.2016
(51) Int. Cl.: B61B 12/00

(54) **SEILBAHNLAUFWAGEN**
CABLE CAR
CHARIOT DE TÉLÉPHÉRIQUE

(30) Priorität: 15.10.2015 AT 508772015
(43) Veröffentlichungstag der Anmeldung: 22.08.2018
(73) Patentinhaber: C.D.C. Chain Drive Crane GmbH, 39040 Aldino (IT)
(72) Erfinder: GURNDIN, Helmut, 39050 Deutschnofen (IT); PHILIPPOV, Alexander, 123154 Moskau (RU)
(74) Vertreter: Wildhack & Jellinek
(86) Internationale Anmeldenummer: PCT/EP2016/074253
(87) Internationale Veröffentlichungsnummer: WO 2017/064014

(56) Entgegenhaltungen:
- AU-B2- 546 493
- CH-A5- 588 372
- CH-A5- 626 021
- CN-U- 203 439 029
- CN-Y- 201 176 352
- DE-U1- 20 213 353

## Beschreibung

Die vorliegende Erfindung betrifft einen Seilbahnlaufwagen gemäß dem Oberbegriff des Patentanspruchs 1, einen Seilkran gemäß dem Oberbegriff des Patentanspruchs 14, eine Personengondel gemäß dem Patentanspruch 15, einen Seilsattel gemäß dem Oberbegriff des Patentanspruchs 16 sowie eine Anordnung gemäß dem Patentanspruch 18.

Aus dem Stand der Technik sind diverse Vorrichtungen bekannt mit deren Hilfe Personen oder Güter entlang eines Tragseils mittels Gondeln befördert werden können. Derartige Vorrichtungen finden besonders Anwendung im Transport von Gütern und Personen im alpinen Bereich bzw. entlang von Transportwegen mit großer Steigung. Aus dem Stand der Technik sind besonders Gondeln und Seilbahnen bekannt, die auf einem Tragseil aufgehängt sind und mittels eines Zugseils entlang des Tragseils verstellt werden.

Weiters sind im Stand der Technik Seilbahnlaufwagen bekannt, die aus zwei Raupenketten bestehen, die an einem Seil aufliegen und motorgetrieben an diesem Seil entlang bewegbar sind. Die CN 201176352 Y offenbart einen Roboter mit zwei übereinander angeordneten Raupenvorrichtungen zwischen denen sich das Tragseil befindet und einem Klemmmechanismus. Die DE 20213353 U1 zeigt eine Seilbahn mit einem Fahrantrieb mit zwei Klemmsträngen zwischen denen sich das Tragseil befindet.

Bei den aus dem Stand der Technik bekannten Systemen bestehen die Nachteile, dass einerseits die Gondeln durch die Verstellung mit einem Zugseil nicht autonom fahren können und beispielsweise bei einem Bruch des Zugseils nicht mehr bewegbar sind. Weiters besteht bei den bekannten Systemen der Nachteil, dass die Motoren für die Bewegung der Gondeln mittels Zugseil meist sehr groß dimensioniert werden müssen und daher sehr kostenintensiv sind. Bei den bekannten Systemen mit Raupenketten, die sich an einem Tragseil entlang bewegen, besteht der Nachteil, dass Anpressvorrichtungen gehlen und damit die Haftung am Seil nur schlecht oder gar nicht gewährleistet werden kann und weiters der Aufbau sehr kompliziert und durch die hohen Belastungen wartungsintensiv ist.

Es ist daher Aufgabe der vorliegenden Erfindung einen Seilbahnlaufwagen, der eingangsgenannten Art zu schaffen, der einen autonomen Transport entlang eines Tragseils ermöglicht.

Diese Aufgabe wird durch die kennzeichnenden Merkmale des Anspruchs 1 gelöst. Dabei ist vorgesehen, dass der Anpressmechanismus zumindest ein Federspannelement umfasst, das die beiden Raupen in Richtung zueinander vorspannt, und dass der Anpressmechanismus zumindest einen Vorspannungszylinder umfasst, der der Kraftwirkung des Federspannelements entgegenwirkt.

Durch den Anpressmechanismus kann der Seilbahnlaufwagen freischwebend und durch Veränderung der Anpressung an verschiedensten Seiltypen und Seildurchmessern entlang bewegt werden. Der Anpressmechanismus wirkt auf die zwei Raupen die gegeneinander bzw. an ein Tragseil angedrückt bzw. angepresst werden, um genügend Haftung bei gleichzeitiger minimaler Belastung der Komponenten zu gewährleisten.

Durch die vorteilhafte Anordnung des Federspannelements mit dem Vorspannungszylinder, kann eine definierte Haltekraft bzw. Anpresskraft im drucklosen Zustand bzw. im Stillstand erreicht werden. Weiters kann die Anpresskraft je nach Druck im Vorspannungszylinder an die jeweilige Fahrsituation angepasst werden und so eine schonende Belastung der Komponenten des Seilbahnlaufwagens erreicht werden.

Besonders vorteilhafte Ausführungsformen des Seilbahnlaufwagens werden durch die Merkmale der abhängigen Ansprüche näher definiert:
Eine vorteilhafte Ausgestaltung des Seilbahnlaufwagens wird bereitgestellt, indem der Anpressmechanismus einen ersten Rahmenteil und einen zweiten Rahmenteil aufweist, wobei der erste Rahmenteil und/oder der zweite Rahmenteil entlang einer Mittelachse verstellbar sind, wobei die erste Raupe, insbesondere an einer ersten Lagerstelle, an dem ersten Rahmenteil und die zweite Raupe, insbesondere an einer zweiten Lagerstelle, an dem zweiten Rahmenteil, insbesondere zueinander verschwenkbar, angeordnet sind.

Die Anpresskraft der beiden Raupen aneinander oder an ein Tragseil kann weiter verbessert werden, wenn der Anpressmechanismus zumindest einen Anpresszylinder umfasst, mit dem die Raupen mit einem vorgegebenen Druck aneinander andrückbar sind, wobei vorzugsweise der Anpresszylinder zwischen dem ersten Rahmenteil und dem zweiten Rahmenteil, diese verbindend angeordnet ist.

Vorteilhaft ist vorgesehen, dass der Anpresszylinder und der Vorspannungszylinder jeweils mit einem Hydrauliksystem, insbesondere dem selben Hydrauliksystem mit gleichem Versorgungsdruck im gesamten Hydrauliksystem, verbunden sind, wobei der Anpresszylinder und der Vorspannungszylinder derart ausgebildet und angeordnet sind, dass die Kraftwirkung des Anpresszylinders und die Kraftwirkung des Vorspannungszylinders, insbesondere bis 90 bar Versorgungsdruck, entgegngesetzt gleich groß auf den Anpressmechanismus wirken und einander aufheben.

Die Steuerung der Anpresskraft in Abhängigkeit von der Antriebsleistung kann vorteilhaft geregelt werden, indem der Druck im Vorspannungszylinder proportional zur Leistung des Antriebs, vorzugsweise durch einen Druckkregeler, regelbar ist, wobei bei Beginn der Bewegung des Seilbahnlaufwagens entlang eines Tragseils im Vorspannungszylinder ein Fahrdruck anliegt, und dass die Kraftwirkung des Vorspannungszylinders bei Vorliegen des Fahrdrucks, insbesondere von 90 bar, die Kraftwirkung des Federspannelements aufhebt.

Vorteilhaft ist vorgesehen, dass die Kraftwirkung des Vorspannungszylinders, insbesondere durch einen mechanischen Anschlag oder den maximalen Hub des Vorspannungszylinders, begrenzt ist, wobei insbesondere eine Erhöhung der Kraftwirkung des Vorspannungszylinders bei Vorliegen des Fahrdrucks unterbindbar ist.

Eine vorteilhafte Anordnung der Komponenten des Anpressmechanismus wird bereitgestellt, wenn der Seilbahnlaufwagen zwei Federspannelemente, zwei Vorspannungszylinder und zwei Anpresszylinder aufweist, die insbesondere in den Anpressmechanismus integriert sind, wobei vorzugsweise die Federspannelemente, die Vorspannungszylinder und die Anpresszylinder jeweils symmetrisch um die Mittelachse, insbesondere auf einer Längsseite der Raupen, an dem Seilbahnlaufwagen angeordnet sind.

Die Spannung der Raupenketten kann besonders vorteilhaft an die Anforderungen des Betriebszustandes des Seilbahnlaufwagens angepasst werden, wenn jede Raupe zumindest einen Spannzylinder umfasst, der die jeweilige Raupenkette spannt und insbesondere parallel zu den einander gegenüberliegenden Kettengliedern der Raupenketten angeordnet ist.

Der Druck in den Zylindern und die Kraftwirkung der Zylinder bzw. des Anpressmechanismus kann besonders einfach eingestellt und vorgegeben werden, wenn der Vorspannungszylinder, der Anpresszylinder und/oder die Spannzylinder öldynamische Hydraulikzylinder sind und jeweils an einem Hydrauliksystem, insbesondere dem selben Hydrauliksystem mit gleichem Versorgungsdruck im gesamten Hydrauliksystem, angeschlossen sind.

In einer vorteilhaften Ausführungsform ist vorgesehen, dass das Federspannelement Tellerfedern umfasst, die insbesondere konzentrisch um den Vorspannungszylinder herum angeordnet sind.

Die Steuerung der Anpresskraft in Abhängigkeit von der Antriebsleistung kann weiters vorteilhaft geregelt werden, wenn der Versorgungsdruck des Vorspannungszylinder, des Anpresszylinders und/oder der Spannzylinder proportional zur Leistung des Antriebs geregelt ist, wobei insbesondere der Druck und Durchfluss im Hydrauliksystem durch den Antrieb vorgebbar ist und der Antrieb das Hydrauliksystem speist.

Um eine vorteilhafte autonome Fortbewegung des Seilbahnlaufwagens bereitzustellen ist vorgesehen, dass der Antrieb der Raupen Verbrennungs- oder Elektromotoren umfasst.

Ein vorteilhafter Antrieb der Raupen sieht vor, dass jede Raupe bzw. die Raupenketten jeweils direkt über Hydraulikmotoren angetrieben sind, wobei vorzugsweise die Hydraulikmotoren gleich ausgebildet sind und durch ein Hydrauliksystem gleich versorgt sind.

Die Haftung zwischen den Kettengliedern und einem Tragseil wird vorteilhaft verbessert, wenn die Kettenglieder zumindest einen Teil des Querschnitts des Tragseils aufnehmen, wobei insbesondere die Kettenglieder der ersten Raupe mehr als den halben Querschnitt des Tragseils aufnehmen.

Eine führerlose Steuerung des Seilbahnlaufwagens wird erreicht, wenn der Antrieb über eine Funksteuerung steuerbar ist.

Eine Differenz der Antriebsleitungen in den Raupen kann besonders gut verhindert werden, wenn der Vorspannungszylinder, der Anpresszylinder und/oder die Spannzylinder mit einem intelligenten Steuerblock verbunden sind, wobei der Druck im Vorspannungszylinder und/oder im Anpresszylinder und/oder den Spannzylindern, vorzugsweise mittels Druckregelventilen die an dem Vorspannungszylinder und/oder dem Anpresszylinder und/oder den Spannzylindern angeschlossen sind, veränderbar ist und dass bei einem durch den Steuerblock ermittelten Schlupf einer oder beider Raupen oder zwischen den Raupen, der Druck im Vorspannungszylinder und/oder im Anpresszylinder und/oder in den Spannzylindern und/oder der durch den Anpressmechanismus aufgebrachten Anpressdruck veränderbar ist. Weiters kann durch den intelligenten Steuerblock, die Anpresskraft bzw. die Kraftwirkung der einzelnen Zylinder an die Fahrbedingungen angepasst werden und so ein Schlupf zwischen den Raupen oder ein Durchrutschen der Raupen an dem Tragseil effektiv verhindert werden.

Um im Notfall den Seilbahnlaufwagen schnell anhalten zu können ist vorgesehen, dass der Antrieb einen Bremsmechanismus aufweist, mit dem der Antrieb bremsbar ist, wobei der Bremsmechanismus vorzugsweise Tellerfedern umfasst.

In einer vorteilhaften Ausführungsform ist vorgesehen, dass jede Raupe jeweils einen Antrieb umfasst, wobei der jeweilige Antrieb das jeweilige Raupenlaufwerk antreibt und vorzugsweise jeweils einen Bremsmechanismus aufweist.

Vorteilhaft ist vorgesehen, dass an dem Seilbahnlaufwagen eine Gondel zum Transport von Personen und/oder Ladegut angeordnet ist, wobei die Gondel insbesondere an einem Verbindungsarm angelenkt ist, der vorzugsweise mit dem ersten Rahmenteil des Anpressmechanismus verbunden ist.

Weiters besteht bei den aus dem Stand der Technik bekannten Raupensystemen der Nachteil, dass die Kräfte und Belastungen in dem Raupenlaufwerk ungleich verteilt sind, wodurch eine erhöhte Belastung der Komponenten des Raupenlaufwerks bewirkt wird, die dadurch stärker dimensioniert oder öfter gewechselt werden müssen bzw. öfter versagen. Ein weiterer Aspekt der vorliegenden Erfindung ist es daher einen Seilbahnlaufwagen, der eingangsgenannten Art zu schaffen, der eine gleichmäßige Lastverteilung innerhalb des Raupenlaufwerks ermöglicht.

Diese Aufgabe wird durch die kennzeichnenden Merkmale des Anspruchs 12 gelöst.

Dabei ist vorgesehen, dass zumindest ein Raupenlaufwerk ein Balancefahrwerk zur gleichmäßigen Kraftverteilung im Raupenlaufwerk umfasst, wobei das Balancefahrwerk eine Anzahl von kaskadenförmig in einer Anzahl von Stufen angeordneter Ausgleichsbalken aufweist, die analog einer Balkenwaage ausgebildet sind, wobei jeder Ausgleichsbalken einen zentralen Drehpunkt und zwei jeweils im gleichen Abstand vom zentralen Drehpunkt, insbesondere nahe dem Ende jedes Augleichsbalkens, angeordnete Enddrehpunkte aufweist, wobei der zentrale Drehpunkt des Ausgleichsbalken der ersten Stufe an dem Anpressmechanismus, insbesondere um die erste Lagerstelle oder die zweite Lagerstelle, verschwenkbar angeordnet ist, wobei jeweils an den Enddrehpunkten der Augleichsbalken jeder Stufe der zentrale Drehpunkt eines benachbarten Augleichsbalkens der nächsten Stufe verschwenkbar angeordnet ist, wobei die Augleichsbalken der zweiten Stufe jeweils mit ihren zentralen Drehpunkten an den Enddrehpunkten des Augleichsbalkens der ersten Stufe angeordnet sind, und an den Enddrehpunkten der Augleichsbalken der zweiten Stufe jeweils ein Augleichsbalken der dritten Stufe mit deren zentralen Drehpunkten verschwenkbar angeordnet sind, usw., wobei an den Enddrehpunkten der Augleichsbalken der letzten Stufe eine Anzahl von Laufrollen angeordnet ist, wobei die Laufrollen um die Enddrehpunkte der Augleichsbalken der letzten Stufe drehbar gelagert sind und wobei die Laufrollen an der jeweiligen Raupenkette an zumindest einem Kettenglied anlegbar sind.

Durch die Ausbildung des Balancefahrwerks bzw. der Ausgleichbalken nach dem Prinzip einer Balkenwaage können Stöße und Unebenheiten auf das Raupenfahrwerk abgefangen werden. Weiters wird so eine stoßfreie Überfahrt über eine Stütze bzw. den Seilsattel einer Stütze ermöglicht.

Der Abstand zwischen der Lagerung der Raupe und den Ketten kann vorteilhaft vorgegeben werden, wenn jeweils die Enddrehpunkte der jeweiligen Ausgleichsbalkens einen Abstand entlang der Höhe zu den jeweiligen zentralen Drehpunkten desselben Ausgleichsbalkens aufweisen, wobei die Verbindungslinien der Enddrehpunkte mit den jeweiligen zentralen Drehpunkten eines Ausgleichsbalkens ein gleichschenkliges Dreieck bilden, wobei insbesondere der Abstand der Enddrehpunkte von den zentralen Drehpunkten entlang der Höhe jedes Ausgleichbalkens in den einzelnen Stufen gleich ist. Weiters wird so auch ein vorteilhafter Kraftverlauf in dem Balancefahrwerk erreicht.

Eine besonders vorteilhafte und bevorzugte Ausführungsform sieht vor, dass das Balancefahrwerk drei Stufen angeordneter Ausgleichsbalken aufweist, wobei jeweils die Enddrehpunkte der jeweiligen Ausgleichsbalken einen Abstand entlang der Höhe zu den jeweiligen zentralen Drehpunkten aufweisen, wobei die Verbindungslinien der Enddrehpunkte mit den jeweiligen zentralen Drehpunkten ein gleichschenkliges Dreieck bilden.

Eine vorteilhafte Kraftverteilung in dem Balancefahrwerke wird einfach erreicht, wenn an jedem Enddrehpunkt jeder Stufe jeweils zwei Ausgleichsbalken verschwenkbar angeordnet sind, wobei die jeweiligen zwei Ausgleichsbalken jeweils symmetrisch auf einer Seite des Ausgleichsbalkens der vorherigen Stufe angeordnet sind.

Ein vorteilhafter Seilkran zum Transport von Ladegut an einem Tragseil wird bereitgestellt, wenn der Seilkran zumindest einen, insbesondere zwei, derartige Seilbahnlaufwagen umfasst, wobei der Seilkran insbesondere an zwei Seilbahnlaufwägen aufgehängt ist

Eine vorteilhafte Personen-Gondel zum Transport von Personen an einem Tragseil, wird bereitgestellt, indem die Personen-Gondel zumindest einen, insbesondere zwei, derartige Seilbahnlaufwagen umfasst, wobei die Personen-Gondel insbesondere an zwei Seilbahnlaufwägen aufgehängt ist.

Weitere Vorteile und Ausgestaltungen der Erfindung ergeben sich aus der Beschreibung und den beiliegenden Zeichnungen.

Die Erfindung ist im Folgenden anhand von besonders vorteilhaften aber nicht einschränkend zu verstehenden Ausführungsbeispielen in den Zeichnungen schematisch dargestellt und wird unter Bezugnahme auf die Zeichnungen beispielhaft beschrieben.

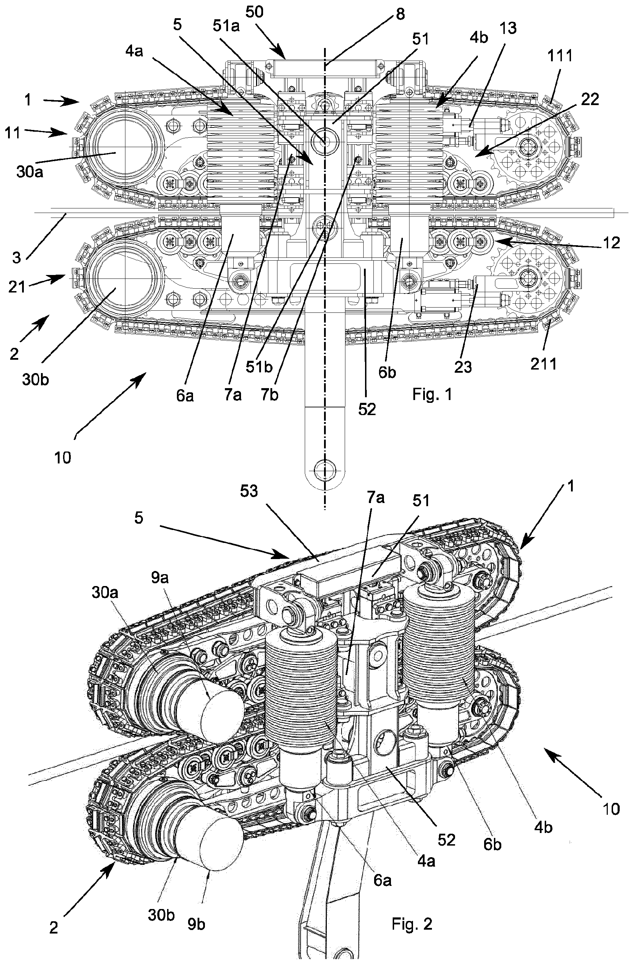

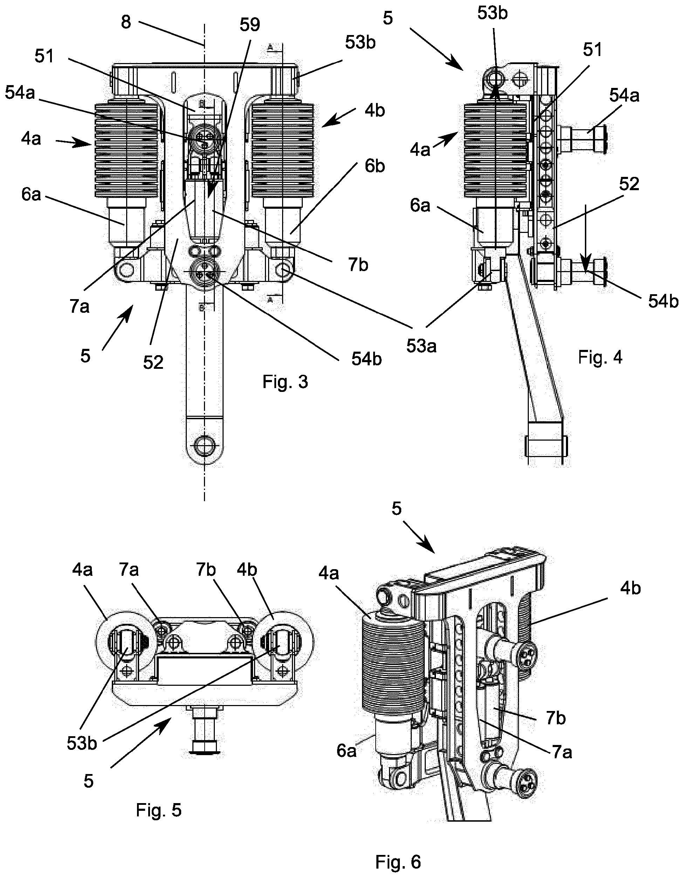

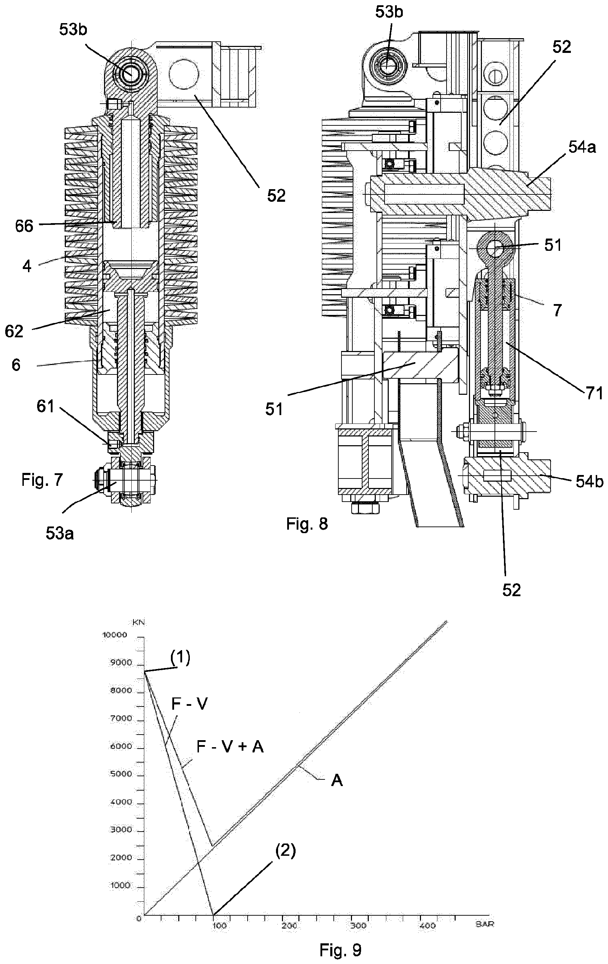

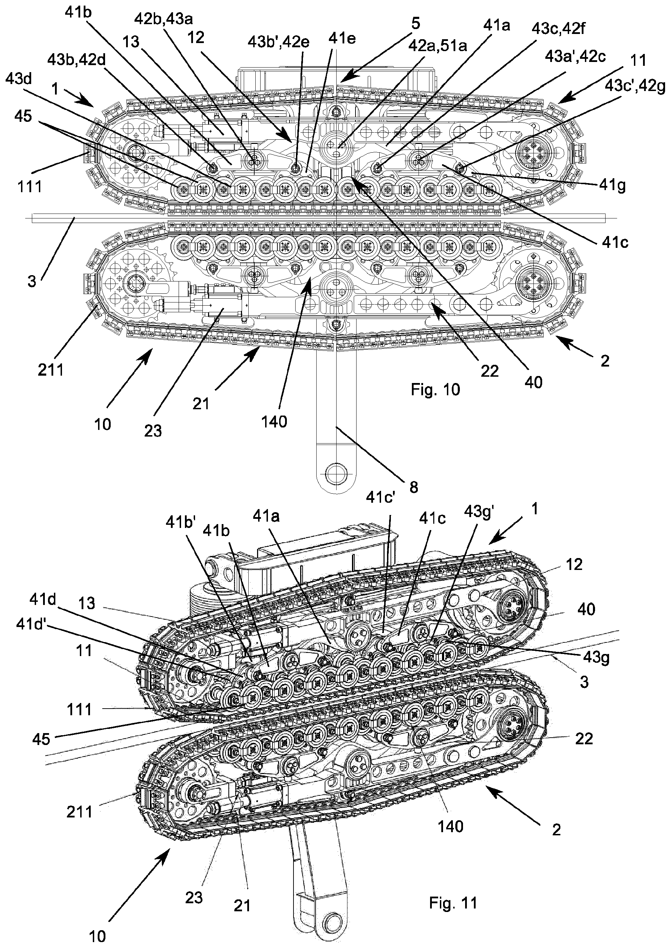

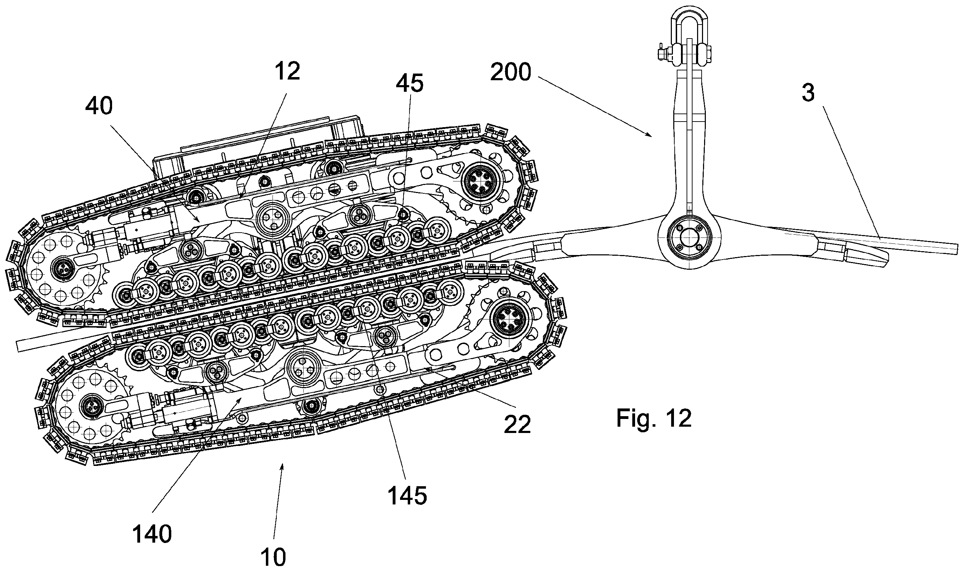

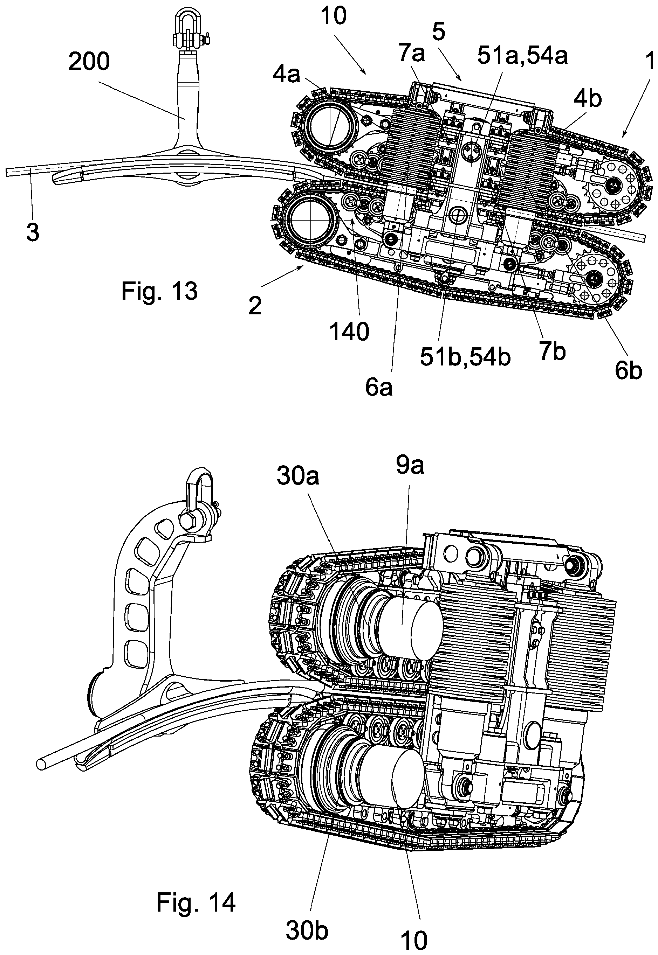

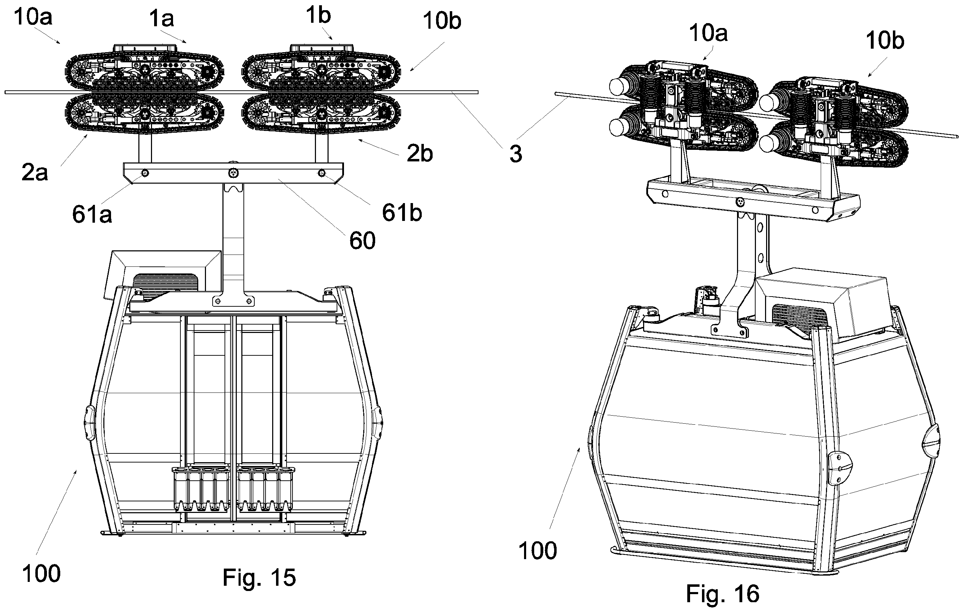

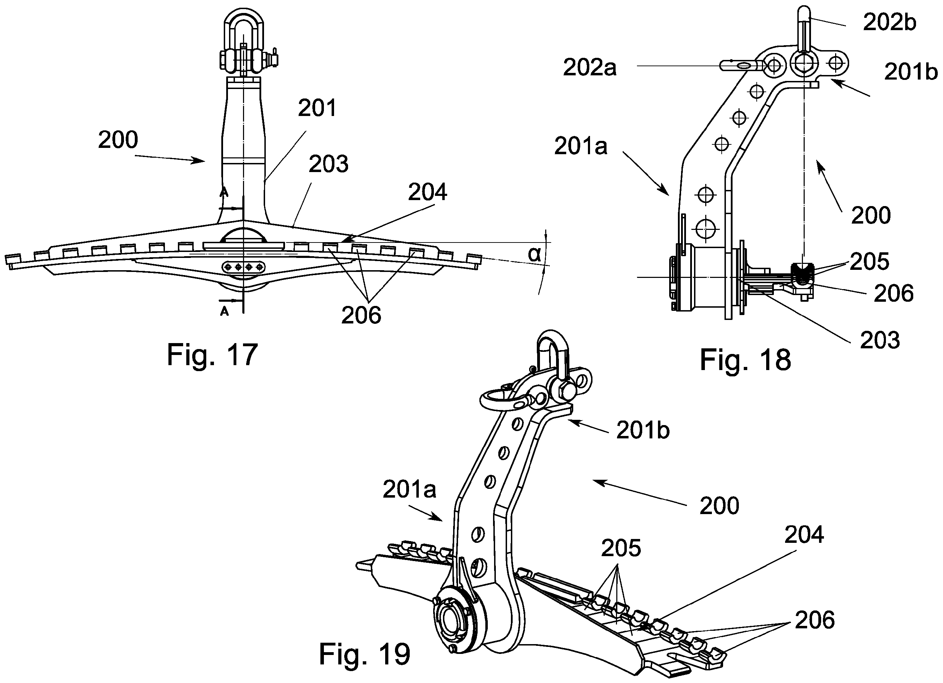

Fig. 1 zeigen eine erste Ausführungsform des erfindungsgemäßen Seilbahnlaufwagens mit einem Anpressmechanismus in Frontansicht, Fig. 2 zeigt eine zweite Ausführungsform des Seilbahnlaufwagens in perspektivischer Ansicht, Fig. 3 bis 6 zeigen eine Ausführungsform des Anpressmechanismus des Seilbahnlaufwagens in Grund-, Auf- und Kreuzriss sowie in perspektivischer Ansicht, Fig. 7 zeigt einen Querschnitt durch den Vorspannungszylinder einer Ausführungsform des Anpressmechanismus, Fig. 8 zeigt einen Querschnitt einer Ausführungsform des Anpressmechanismus, Fig. 9 zeigt ein Diagramm der Kraftwirkung einer Ausführungsform des Anpressmechanismus des Seilbahnlaufwagens, Fig. 10 zeigt eine weitere Ausführungsformen eines erfindungsgemäßen Seilbahnlaufwagens mit einem Balancefahrwerk in Frontansicht, Fig. 11 zeigt eine perspektivische Ansicht einer weiteren Ausführungsform des Seilbahnlaufwagens mit einem Balancefahrwerk, Fig. 12 zeigt eine Ausführungsform des Seilbahnlaufwagens bei Auffahrt auf einen Seilschuh, Fig. 13 und 14 zeigen eine weitere Ausführungsform des Seilbahnlaufwagens mit Balancefahrwerk und Anpressmechanismus in Front- und perspektivischer Ansicht, Fig. 16 und 17 zeigen eine Ausführungsform einer Personengondel mit einer Ausführungsform von zwei Seilbahnlaufwagen in Front- und perspektivischer Ansicht und Fig. 17 bis 19 zeigen einen erfindungsgemäßen Seilschuh in Front- und Kreuzansicht sowie in perspektivischer Ansicht.

Fig. 1 zeigt eine Ausführungsform des erfindungsgemäßen Seilbahnlaufwagens 10 zum Transport von Gütern oder Personen in Frontansicht. Der Seilbahnlaufwagen 10 umfasst zwei gegenüberliegende in einer Ebene übereinander angeordnete Raupen 1, 2, wobei die Raupen 1, 2 jeweils eine Raupenkette 11, 21 umfassen. Eine Anzahl von Kettengliedern 111, 211 bilden jeweils die geschlossene Raupenkette 11, 21 der Raupen 1, 2. Die Raupenketten 11, 21 sind gegenüberliegend in einem Abstand zueinander angeordnet und ein Tragseil 3 zwischen den beiden Raupen 1, 2 in die Raupenketten 11, 21 bzw. die Kettenglieder 111, 211 eingebracht. Die Kettenglieder 111, 211 nehmen jeweils einen Teil des Querschnitts des Tragseils 3 auf. Die Kettenglieder 111 der ersten Raupe 1 nehmen, bei dieser Ausführungsform, mehr als den halben Querschnitt des Tragseils 3 auf und reichen über die Mittelebene des Tragseils 3 in Richtung der Kettenglieder 211 der zweiten Raupe 2. die Kettenglieder 211 der zweiten Raupe 2 nehmen ebenfalls einen Teil des Querschnitts des Tragseils 3 auf, wobei dieser Teil weniger als der halbe Querschnitt ist.

Der Seilbahnlaufwagen 10 umfasst weiters einen Anpressmechanismus 5, der die Raupen 1, 2 miteinander verbindet, den Abstand der beiden Raupen 1, 2 zueinander vorgibt bzw. einstellt und die Anpresskraft der beiden Raupen 1, 2 an dem Tragseil 3 bzw. zueinander vorgibt. Der Seilbahnlaufwagen 10 umfasst einen Antrieb 30, der über ein Raupenlaufwerk 12 bzw. 22 die jeweiligen Raupen 1, 2 antreibt und die Raupen 1,2 bzw. den Seilbahnlaufwagen 10 entlang des Tragseils 3 bewegt bzw. verstellt. Der Antrieb 30 ist bei dieser Ausführungsform zweiteilig ausgeführt, wobei jede Raupe 1, 2 jeweils einen Teilantrieb 30a bzw. 30b umfasst. Der Teilantrieb 30a der ersten Raupe 1 bzw. der Teilantrieb 30b der zweiten Raupe 2 treibt jeweils die Raupenkette 11 bzw. 21 über ein Ritzel, das in die Kettenglieder 111 bzw. 211 eingreift, an. Der Anpressmechanismus 5 umfasst bei dieser Ausführungsform zwei Vorspannungszylinder 6a, 6b, die symmetrisch zur normal zum Tragseil 3 stehenden Mittelachse 8 neben den Raupen 1, 2 angeordnet sind. Um die Vorspannungszylinder 6a, 6b ist jeweils ein Federspannelement 4a. 4b angeordnet, das bei dieser Ausführungsform als Tellerfedernpaket ausgebildet ist. Der Anpressmechanismus 5 umfasst einen Rahmen 50, der einen ersten Rahmenteil 51 und einen zweiten Rahmenteil 52 aufweist, die zu einander entlang der Mittelachse 8 verstellbar sind. An dem ersten Rahmenteil 51 des Rahmens 50 ist die erste Raupe 1 in einer ersten Lagerstelle 51a gelagert. Die zweite Raupe 2 ist in einer zweiten Lagerstelle 51b an dem zweiten Rahmenteil 52a des Rahmens 50 gelagert. Die Lagerungen 51a, 51b der Raupen 1, 2 ist entsprechend einem Drehgelenk ausgebildet, wobei die Raupen 1, 2 jeweils für sich um die Lagerung 51a bzw. 51b verdrehbar bzw. verschwenkbar sind. Durch den Anpressmechanismus 5 wird der Abstand zwischen der ersten Raupe 1 und der zweiten Raupe 2 bzw. zwischen den Lagerungen 51a bzw. 51b des Rahmens 50 vorgegeben. Der Anpressmechanismus 5 bewirkt eine Kraftwirkung entlang der Mittelachse 8 auf die Raupen 1, 2 bzw. zwischen dem ersten Rahmenteil 51 und dem zweiten Rahmenteil 52. Der Abstand zwischen der ersten Raupe 1 und der zweiten Raupe 2 wird dabei vorgegeben und die Anpressung der beiden Raupen 1,2 gegeneinander entlang der Mittelachse 8 bzw. die Anpressung der Raupen 1, 2 an das Tragseil 3 vorgegeben.

Fig. 2 zeigt eine perspektivische Ansicht einer Ausführungsform des Seilbahnlaufwagens 10. Die Federspannelemente 4a, 4b sind als Tellerfedern ausgeführt und bewirken eine Kraftwirkung des ersten Rahmenteils 51 zum zweiten Rahmenteil 52 des Rahmens 50. Die als Druckfedern wirkenden Tellerfedern der Federspannelemente 4a, 4b bewirken bei Vergrößerung des Abstandes zwischen den Tellerfedern bzw. Ausübung der Druckkraft auf einen Arm 53, der an dem ersten Rahmenteil 51 des Rahmens 50 befestigt ist, eine Annäherung bzw. ein Zusammenpressen der ersten Raupe 1 zur zweiten Raupe 2. Die Vorspannungszylinder 6a bzw. 6b haben die gleiche Wirkachse wie die Federspannelemente 4a, 4b die Kraftwirkung der Vorspannungszylinder 6a, 6b ist jedoch den Federspannelementen 4a, 4b entgegengesetzt ausgebildet. Die Vorspannungszylinder 6a, 6b heben somit mit steigender Kraftwirkung, die durch die Federspannelemente 4a, 4b auf die Raupen 1, 2 ausgewirkte Anpresskraft schrittweise auf.

Die Funktion der Ausführungsformen des Anpressmechanismus 5 der Fig. 1 und Fig. 2 wird dabei wie folgt ausgeführt:
Im Stillstand wirkt die volle Anpresskraft der Federspannelemente 4a, 4b auf die erste Raupe 1 bzw. auf die zweite Raupe 2, wobei diese maximal zusammengepresst werden und eine Haltekraft auf das Seil 3 ausgeübt wird. Beim Anfahren des Seilbahnlaufwagens 10 wird die Kraftwirkung der Vorspannungszylinder 6a, 6b erhöht und so die gesamte Anpresswirkung zwischen der ersten Raupe 1 und der zweiten Raupe 2 vermindert, wodurch eine Bewegung des Seilbahnlaufwagens 10 entlang des Tragseils 3 durch den Antrieb 30 bzw. durch die beiden Teilantriebe 30a, 30b erleichtert bzw. ermöglicht wird. Mit steigender Fahrtgeschwindigkeit wird der Anpressdruck durch Erhöhung des Drucks in den Vorspannungszylindern 6a, 6b reduziert und so eine erhöhte Fahrtgeschwindigkeit bzw. verminderte Reibung ermöglicht.

In den Fig. 3 bis 6 ist eine bevorzugte Ausführungsform des Anpressmechanismus 5 in Front- (Fig. 3), Kreuz- (Fig. 4), Draufsicht (Fig. 5) und perspektivischer Ansicht (Fig. 6) dargestellt. Der Rahmen 50 des Anpressmechanismus 5 ist bei dieser Ausführungsform ebenfalls zweiteilig ausgeführt, wobei der Anpressmechanismus 5 einen ersten Rahmenteil 51 und einen zweiten Rahmenteil 52 umfasst. Der zweite Rahmenteil 52 ist zu dem ersten Rahmenteil 51 entlang der Mittelachse 8 im Abstand verstellbar, wobei der zweite Rahmenteil 52 an dem ersten Rahmenteil 51 entlang gleitet. An dem ersten Rahmenteil 51 ist ein Lagerzapfen 54a und an dem zweiten Rahmenteil 52 ist ein zweiter Lagerzapfen 54b angeordnet. Der erste Lagerzapfen 54a durchsetzt das zweite Rahmenteil 52 in einer Ausnehmung 59. An dem ersten Lagerzapfen 54a ist die erste Raupe 1 über eine Lagerstelle 51a mit dem Rahmen 50 verbunden und die zweite Raupe 2 über den zweiten Lagerzapfen 54b mit der zweiten Lagerung 51b an dem zweiten Rahmenteil 52 angeordnet. Die Ausführungsform der Fig. 3 bis 6 weist symmetrisch um die Mittelachse 8 angeordnete Federspannelemente 4a, 4b und konzentrisch zu den Federspannelementen 4a, 4b angeordnete Vorspannungszylinder 6a, 6b auf. Die Vorspannungszylinder 6a, 6b und die Federelemente 4a und 4b sind jeweils an dem ersten Rahmenteil 51 und dem zweiten Rahmenteil 52 des Rahmens 50 angelenkt, wobei jeweils der Vorspannungszylinder 6a, 6b das erste Rahmenteil 51 mit dem zweiten Rahmenteil 52 verbindet. Ein Ende des jeweiligen Vorspannungszylinders 6a, 6b ist an einem Anlenkungspunkt 53a des ersten Teils 51 angelenkt und das andere Ende des jeweiligen Vorspannungszylinders 6a, 6b an einem Anlenkungspunkt 53b des zweiten Teils 52. Bei Aufweitung des Abstands zwischen den Tellerfedern des Federelements 4a bzw. 4b wird der zweite Rahmenteil 52 zum ersten Rahmenteil 51 des Rahmen 50 entlang der Mittelachse 8 verstellt, wobei sich der Abstand zwischen dem zweiten Rahmenteil 52 und dem ersten Rahmenteil 51 bzw. dem Lagerzapfen 54a bzw. 54b vergrößert. Der erste Rahmenteil 51 ist dabei in dem Rahmen 50 gelagert und kann eine translatorische Bewegung relativ zum zweiten Rahmenteil 52 vollziehen. Die Kraftwirkung der Vorspannungszylinder 6a, 6b ist der Kraftwirkung der Federspannelemente 4a, 4b entgegengesetzt ausgebildet, wodurch eine Aufhebung der Kraftwirkung je nach Anliegen des Druckes in den Vorspannungszylindern 6a, 6b erfolgt.

Fig. 4 zeigt die resultierende Kraftwirkung bzw. die Bewegungswirkung der Vorspannungszylinder 6a bzw. 6b mit den Federelementen 4a, 4b auf den Rahmen 50. Über den Rahmen 50 wird bei Anliegen einer resultierenden Druckkraft am ersten Anlenkungspunkt 53b des zweiten Rahmenteils 52 über die Anlenkung der Vorspannungszylinder 6a, 6b zwischen dem ersten Rahmenteil 51 und dem zweiten Rahmenteil 52 des Rahmens 50 eine Annäherung der Lagerzapfen 54a bzw. 54b zueinander bewirkt.

Der Anpressmechanismus 5 weist bei der in den Fig. 3 bis 6 gezeigten Ausführungsform weiters zwei Anpresszylinder 7a, 7b auf. Die Anpresszylinder 7a, 7b sind symmetrisch zur Mittelachse 8 angeordnet und zwischen dem ersten Rahmenteil 51 und dem zweiten Rahmenteil 52 des Rahmens 50 angelenkt. Die Anpresszylinder 7a, 7b bewirken dabei eine Kraftwirkung entlang der Mittelachse 8. Der Anpressmechanismus 5 umfasst eine Kraftbegrenzung, die die Kraft der Vorspannungszylinder 6a, 6b begrenzt. Die Kraftbegrenzung der Vorspannungszylinder 6a, 6b kann dabei als Anschlag oder als maximaler Kolbenweg der Vorspannungszylinder 6a, 6b ausgebildet sein. Die Kraftbegrenzung der Vorspannungszylinder 6a, 6b bewirkt eine maximale Kraftwirkung der beiden Vorspannungszylinder 6a, 6b, die der maximalen Kraft der Federelemente 4a, 4b entspricht. Die Vorspannungszylinder 6a, 6b und die Anpresszylinder 7a, 7b können als öldynamische Hydraulikzylinder ausgeführt sein und über ein Hydrauliksystem mit einem Versorgungsdruck versorgt werden. Die Veränderung des Versorgungsdrucks im Hydrauliksystem bewirkt dabei eine Veränderung der Kraftwirkung der Vorspannungszylinder 6a, 6b bzw. der Anpresszylinder 7a, 7b.

In einer bevorzugten Ausführungsform wird der Druck in den Vorspannungszylindern 6a, 6b proportional zur Leistung des Antriebs 30 geregelt, wobei bei Beginn der Bewegung des Seilbahnlaufwagens 10 entlang des Tragseils 3 im Vorspannungszylinder 6a, 6b ein Fahrdruck anliegt. Bei Vorliegen des Fahrdrucks in den Vorspannungszylindern 6a, 6b wird die Kraftwirkung der Federelemente 4a, 4b aufgehoben und damit die Anpressung der beiden Raupen 1, 2 zueinander aufgehoben. Vorteilhafterweise kann vorgesehen sein, dass der Anpressmechanismus 5 einen Kraftbegrenzer für die Kraftwirkung der Vorspannungszylinder 6a, 6b aufweist und der Kraftbegrenzer bei Erhöhung des Versorgungsdrucks über den Fahrdruck hinaus eine Krafterhöhung der Vorspannungszylinder 6a, 6b verhindert. Dies kann beispielsweise über einen Anschlag oder über die Auslegung der Verspannungszylinder 6a, 6b mit einem maximalen Kolbenhub erfolgen.

Die Anpresszylinder 7a, 7b haben eine entgegengesetzte Kraftwirkung zu den Vorspannungszylindern 6a, 6b bzw. eine gleichgerichtete Kraftwirkung zu den Federspannelementen 4a, 4b, wodurch bei Erhöhung des Versorgungsdrucks in den Anpresszylindern 7a, 7b der zweite Rahmenteil 52 dem ersten Rahmenteil 51 angenähert wird bzw. deren Abstand verringert oder der Anpressdruck zwischen den Raupen 1, 2 erhöht wird. Fig. 7 zeigt einen Querschnitt durch den Vorspannungszylinder 6 einer erfindungsgemäßen Ausführungsform des Anpressmechanismus 5. Um einen Rahmenteil der Mantelfläche des Vorspannungszylinders 6 ist das Federspannelement 4 konzentrisch zur Achse des Vorspannungszylinders 6 angeordnet. Die Kraftwirkung des Vorspannungszylinders 6 bzw. des Federspannelementes 4 ist, analog zu den in den Fig. 1 bis 6 beschrieben Ausführungsformen, einander entgegengesetzt gerichtet. Das Federspannelement 4 bewirkt eine Kraftwirkung entlang der Achse des Vorspannungszylinders 6, wobei eine Abstandsvergrößerung zwischen der Anlenkung 53a des ersten Rahmenteils 51 zu der Anlenkung 53b des zweiten Rahmenteils 52 bewirkt wird. Über die Einlassöffnung 61 tritt Öl in den als öldynamischen Hydraulikzylinder ausgebildeten Vorspannungszylinder 6 in die Ölkammer 62 ein und der Vorspannungszylinder 6 bewirkt eine Kraftwirkung entlang der Achse des Vorspannungszylinders 6 entgegen der Kraftwirkung des Federspannelementes 4, wodurch der Abstand zwischen der Anlenkung 53a des ersten Rahmenteils 51 und der Anlenkung 53b des zweiten Rahmenteils 52 verringert wird. Die Kraftwirkung des Federspannelementes 4 wird somit bei Erhöhung des Versorgungsdrucks in dem Vorspannungszylinder 6 schrittweise reduziert und die resultierende Kraftwirkung zwischen dem ersten Rahmenteil 51 und dem zweiten Rahmenteil 52 des Rahmens 50 bzw. durch den Anpressmechanismus 5 vermindert. Durch eine Ausgestaltung des Anpressmechanismus 5, wie in Fig. 1 bis 2 bzw. Fig. 3 bis 6 gezeigt, kann somit die Kraftwirkung des Anpressmechanismus 5 bzw. der Raupen 1 und 2 zueinander bzw. auf das Tragseil 3 verändert werden. Durch die Begrenzung des Verstellweges des Vorspannungszylinders 6 wie in Fig. 7 dargestellt durch einen Anschlag 66 wird die maximale Kraftwirkung des Vorspannungszylinders 6 begrenzt.

Fig. 8 zeigt eine Schnittansicht entlang der Achse eines Anpresszylinders 7. Der Anpresszylinder 7 ist zwischen dem ersten Rahmenteil 51 und dem zweiten Rahmenteil 52 des Rahmens 50 des Anpressmechanismus 5 angeordnet. Bei Erhöhung des Versorgungsdrucks in der Ölkammer 71 des als öldynamischen Hydraulikzylinder ausgebildeten Vorspannungszylinders 7 wird das Einfahren des Kolbens des Vorspannungszylinders 7 bewirkt, wodurch der Abstand der Lagerzapfen 54a, 54b zueinander verringert bzw. die Kraftwirkung der Lagerzapfen 54a, 54b zueinander erhöht wird.

Der in Fig. 7 dargestellte Vorspannungszylinder 6 kann bei den Ausführungsformen der Fig. 1 und 2 bzw. 3 bis 6 des Anpressmechanismus 5 vorteilhaft verwendet werden und besonders bevorzugt mit dem Vorspannungszylinder 7 der Fig. 8 bzw. zwei Vorspannungszylindern 7a, 7b, wie in den Fig. 3 bis 6 dargestellt, kombiniert werden.

Fig. 9 zeigt ein Diagramm der Kraftwirkung einer Ausführungsform des Seilbahnlaufwagens 10 mit erfindungsgemäßen Anpressmechanismus 5. Der Anpressmechanismus 5 umfasst dabei zumindest einen Vorspannungszylinder 6, ein Federspannelement 4 und einen entsprechend der Fig. 8 angeordneten Anpresszylinder 7. Die y-Koordinate des Diagramms zeigt die Kraftwirkung der einzelnen Teile des Anpressmechanismus beispielhaft, wobei die x-Achse den Versorgungsdruck des Vorspannungszylinders 6 und des Anpresszylinders 7 abbildet. Ausgehend von der maximalen Kraftwirkung des Federspannelements 4 (siehe Punkt (1)) wird bei Erhöhung des Versorgungsdrucks durch die Kraftwirkung V des Vorspannungszylinders 6 die Kraftwirkung F des Federspannelements 4 reduziert, wobei gleichzeitig eine Anhebung der Kraftwirkung A des Anpresszylinders 7 erfolgt. Durch Erhöhung des Versorgungsdrucks in dem Vorspannungszylinder 6 und dem Anpresszylinder 7 wir die Kraftwirkung F - V + A des Anpressmechanismus 5 reduziert bis die Kraftwirkung F des Federspannelementes 4 durch die Kraftwirkung V des Vorspannungszylinders 6 vollständig aufgehoben wird (2) und nur mehr die Kraftwirkung A des Anpresszylinders 7 an dem Anpressmechanismus 5 anliegt. Bei einer weiteren Erhöhung des Versorgungsdrucks in dem Anpresszylinder 7 wird die Anpresskraft der beiden Raupen 1, 2 zueinander bzw. die Anpresskraft des Anpressmechanismus 5 weiter erhöht. Die Aufhebung der Kraftwirkung F des Federspannelementes 4 mit der Kraftwirkung V des Vorspannungszylinders 6 wird bevorzugt bei Anliegen eines Fahrtdruckes von ca. 90 bar erreicht. Der Fahrtdruck liegt dabei im Versorgungssystem an, wenn der Seilbahnlaufwagen 10 durch den Antrieb 30 in Bewegung gesetzt wird und der Seilbahnlaufwagen 10 sich entlang des Tragseils 3 zu bewegen beginnt. Durch die Aufhebung der Kraftwirkung F des Federspannelements 4 mit der Kraftwirkung V des Vorspannungszylinder 6 bei Fahrtbeginn des Seilbahnlaufwagens 10 wird eine optimale Kraftwirkung des Anpressmechanismus 5 bzw. eine optimale Anpresskraft zwischen der ersten Raupe 1 und der zweiten Raupe 2 bewirkt, die eine Schonung der Bauteile des Seilbahnlaufwagens 10 bei gleichzeitiger optimaler Anpresswirkung erreicht.

Der Anpresszylinder 7 bzw. die Anpresszylinder 7a, 7b der Vorspannungszylinder 6 bzw. die Vorspannungszylinder 6a, 6b können bei den in den Fig. 1 bis 8 gezeigten Ausführungsformen als öldynamische Hydraulikzylinder ausgebildet sein und jeweils an einem Hydrauliksystem angeschlossen sein, wobei die Zylinder insbesondere an demselben Hydrauliksystem mit gleichem Versorgungsdruck bzw. gleichem Versorgungszustand im gesamten Hydrauliksystem angeschlossen sind. Weiters kann das Hydrauliksystem proportional zur Antriebsleistung des Antriebs 30 durch Druckventile oder einem intelligenten Steuerblock geregelt werden.

Der Versorgungsdruck des Spannungszylinders 6 bzw. der Vorspannungszylinder 6a, 6b des Anpresszylinders 7 bzw. der Anpresszylinder 7a, 7b kann proportional zur Leistung des Antriebs 30 geregelt werden, wobei der Druck und der Durchfluss im Hydrauliksystem durch den Antrieb 30 vorgegeben wird, wobei der Antrieb 30 insbesondere das Hydrauliksystem speist und damit eine mit der Antriebsleistung des Antriebs 30 steigender Versorgungsdruck bzw. -durchfluss in den Hydraulikzylindern erzielt werden kann.

Alternativ kann der erfindungsgemäße Seilbahnlaufwagen 10 auch über einen Bremsmechanismus 9 verfügen, der beispielsweise in den Antrieb 30 integriert ist. Der Bremsmechanismus 9 kann dabei als Notbremsmechanismus ausgebildet sein und bei Versagen des Antriebs oder einzelner Teile der Raupen 1, 2 den Antrieb 30 bremsen und so den Seilbahnlaufwagen 10 zum Stillstand bringen.

Fig. 1 und 2 zeigen eine mögliche Ausführungsform des Bremsmechanismus 9. Die jeweiligen Antriebe 30a, 30b der Raupen 1, 2 können dabei um einen Bremsmechanismus 9a bzw. Bremsmechanismus 9b erweitert sein. Der Bremsmechanismus 9a bzw. 9b kann Tellerfedern umfassen, die auf den jeweiligen Antrieb 30a, 30b eine bremsende Wirkung bewirken.

In den folgenden Fig. 10 bis 12 ist ein besonders vorteilhaftes, aber nicht einschränkend zu verstehendes Ausführungsbeispiel eines erfindungsgemäßen Seilbahnlaufwagens 10 mit einem Balancefahrwerk 40 dargestellt. Der Seilbahnlaufwagen 10 umfasst einen Anpressmechanismus 5 sowie zwei in einer Ebene übereinander deckungsgleich angeordneter Raupen 1, 2. Die Raupenketten 11, 21 der Raupen 1, 2 werden durch eine Anzahl von aneinander gereihten Kettengliedern 111, 211 gebildet. Die Raupenketten 11, 21 werden mittels eines nicht dargestellten Antriebs 30 jeweils über ein Raupenlaufwerk 12, 22 angetrieben. Die Raupenlaufwerke 12, 22 der Raupen 1, 2 sind als Balancefahrwerk 40 ausgebildet. Das Balancefahrwerk 40 ermöglicht eine gleichmäßige Kraftverteilung innerhalb des jeweiligen Raupenlaufwerks 12, 22.

Bei einem erfindungsgemäßen Seilbahnlaufwagen 10 umfasst ein Balancefahrwerk 40 zur gleichmäßigen Kraftverteilung im Raupenlaufwerk eine Anzahl von kaskadenförmig in einer Anzahl von Stufen angeordneter Ausgleichsbalken 41a bis 41n. Die Ausgleichsbalken 41a bis 41n sind analog einer Balkenwaage ausgebildet, wobei jeder Ausgleichsbalken 41a bis 41n einen zentralen Drehpunkt 42a bis 42n und zwei jeweils im gleichen Abstand vom zentralen Drehpunkt 42a bis 42n angeordnete Enddrehpunkte 43a bis 43n, 43a' bis 43n' aufweist. Die Enddrehpunkte 43a bis 43n und 43a' bis 43n' der jeweiligen Ausgleichsbalken 41a bis 41n weisen einen Abstand entlang der Höhe zu den jeweiligen zentralen Drehpunkten 42a, bis 42n desselben Ausgleichsbalkens 41a bis 41n auf. Die gedachten Verbindungslinien der Enddrehpunkte 43a bis 43n und 43a' bis 43n' mit den jeweiligen zentralen Drehpunkten 42a bis 42n eines Ausgleichsbalkens 41a bis 41n bilden ein gleichschenkliges Dreieck. Der Abstand der Enddrehpunkte 43a bis 43n und 43a' bis 43n' von den zentralen Drehpunkten 42a bis 42n entlang der Höhe jedes Ausgleichbalkens 41a bis 41n kann in den einzelnen Stufen gleich sein aber auch von Stufe zu Stufe variieren. Der zentrale Drehpunkt 42a des ersten Ausgleichsbalken 41a der ersten Stufe wird an dem Anpressmechanismus 5, beispielsweise der ersten Lagerstelle 51a oder der zweite Lagerstelle 51b, verschwenkbar angeordnet. Jeweils an den Enddrehpunkten 43a bis 43n, 43a' bis 43n' der Augleichsbalken 41a bis 41n jeder Stufe ist der zentrale Drehpunkt 42a bis 42n eines benachbarten Augleichsbalkens 41b bis 41n der nächsten Stufe verschwenkbar angeordnet. So werden die Augleichsbalken 41b, 41c der zweiten Stufe jeweils mit ihren zentralen Drehpunkten 42b, 42c an den Enddrehpunkten 43a, 43a' des Augleichsbalkens 41a der ersten Stufe angeordnet. An den Enddrehpunkten 43b, 43b' und 43c, 43c' der Augleichsbalken 41b, 41c der zweiten Stufe sind jeweils ein Augleichsbalken 41d, 41e, 41f, 41g der dritten Stufe mit deren zentralen Drehpunkten 42d, 42e, 42f, 42g verschwenkbar angeordnet, usw..

An den Enddrehpunkten 43x bis 43n, und 43x' bis 43n' der Augleichsbalken 41x bis 41n der letzten Stufe ist eine Anzahl von Laufrollen 45 angeordnet, wobei die Laufrollen 45 um die Enddrehpunkte 43x bis 43n, und 43x' bis 43n' der Augleichsbalken 41x bis 41n der letzten Stufe drehbar gelagert sind. Die Laufrollen 45 liegen dann an der jeweiligen Raupenkette 11, 21 an zumindest einem Kettenglied 111, 211 an.

Fig. 10 und 11 zeigen eine besonders vorteilhafte Ausführungsform des Seilbahnlaufwagens 10 mit einem in jeder Raupe 1, 2 integrierten bevorzugten Balancefahrwerk 40, 140. Das Balancefahrwerk 40 umfasst eine Anzahl von kaskadenförmig, in drei Stufen angeordneter Ausgleichsbalken 41a bis 41g. Die Ausgleichsbalken 41a bis 41n sind dabei analog einer Balkenwaage ausgebildet. Jeder Ausgleichsbalken 41a bis 41n umfasst einen, jeweils in der Mitte des jeweiligen Ausgleichbalkens 41a bis 41n, angeordneten zentralen Drehpunkt 42a bis 42g. Jeweils im gleichen Abstand vom zentralen Drehpunkt 42a bis 42g des jeweiligen Ausgleichbalkens 41a bis 41g sind zwei Enddrehpunkte 43a bis 43g bzw. 43a' bis 43g' angeordnet. Die Enddrehpunkte 43a bis 43g bzw. 43a' bis 43g' liegen jeweils nahe dem Ende des jeweiligen Ausgleichbalkens 41a bis 41g. Der Ausgleichsbalken 41a ist mit dem zentralen Drehpunkt 42a an dem Anpressmechanismus 5, bei dieser Ausführungsform an einer ersten Lagerstelle 51a, verschwenkbar durch ein Drehgelenk gelagert. Am ersten Enddrehpunkt 43a des ersten Ausgleichbalkens 41a der ersten Stufe ist der erste Ausgleichbalken 41b der zweiten Stufe angeordnet, wobei der zentrale Drehpunkt 42b des ersten Ausgleichbalkens 41b der zweiten Stufe an dem ersten Enddrehpunkt 43a des ersten Ausgleichbalkens 41a der ersten Stufe drehbar bzw. verschwenkbar in einem Drehgelenk angeordnet ist. An dem zweiten Enddrehpunkt 43a' des ersten Balkens 41a der ersten Stufe ist der zweite Ausgleichbalken 41c der zweiten Stufe angeordnet, wobei der zweite Ausgleichbalken 41c der zweiten Stufe mit dem zentralen Drehpunkt 42c an dem Enddrehpunkt 43a' des ersten Ausgleichbalkens 41a der ersten Stufe verschwenkbar bzw. drehbar gelagert ist. Die vier Ausgleichbalken 41d bis 41g der dritten Stufe sind jeweils mit ihren zentralen Drehpunkten 42d bis 42g jeweils an einem Enddrehpunkt 43b, 43b' des ersten Ausgleichbalkens 41b der zweiten Stufe bzw. an einem Enddrehpunkt 43c, 43c' des zweiten Ausgleichbalkens 41c der zweiten Stufe verschwenkbar angeordnet. An den Enddrehpunkten 43d bis 43g bzw. 43d' bis 43g' der Ausgleichbalken 41d bis 41g der dritten Stufe ist jeweils eine Anzahl von Laufrollen 45 angeordnet, die an der Raupenkette 11 jeweils an zumindest einem Kettenglied 111 anliegen. Das Balancefahrwerk 40 ist symmetrisch um die Mittelachse 8 des Anpressmechanismus 5 angeordnet. Die Enddrehpunkte 43a bis 43g bzw. 43a' bis 43g' der jeweiligen Ausgleichbalken 41a bis 41g sind jeweils in einem Abstand entlang der Höhe des jeweiligen Ausgleichbalkens 41a bis 41g zu den jeweiligen zentralen Drehpunkten 42a bis 42g angeordnet bzw. weisen einen Abstand in Richtung der Mittelachse 8 des Anpressmechanismus 5 auf. Die Enddrehpunkte 43a bis 43g bzw. 43a' bis 43g' der Ausgleichbalken 41a bis 41g bzw. deren Verbindungslinien sind in einem gleichschenkeligen Dreieck angeordnet. Durch den Abstand in Richtung der Höhe der jeweiligen Enddrehpunkte 43a bis 43a' zu den zentralen Drehpunkten 42a bis 42g wird der Abstand der Laufrollen 45 zum zentralen Drehpunkt 42a des ersten Ausgleichbalkens 41a der ersten Stufe bewirkt bzw. der Abstand der ersten Lagerstelle 51a zu den Kettengliedern 111 bzw. zum Tragseil 3 vorgegeben. Durch die Anordnung der Ausgleichbalken 41a bis 41g im Prinzip einer Balkenwaage, wird eine gleichmäßige Gewichtsverteilung bzw. Kraftverteilung über alle Laufrollen 45 erreicht. Durch die drehbar angeordneten zentralen Drehpunkte 42a bis 42g der Ausgleichbalken 41a bis 41g ist eine Ausgleichsbewegung der Laufrollen 45 bzw. der Kettenglieder 111 entlang eines Tragseils 3 möglich, wodurch Buckel bzw. Erweiterungen oder Abstandsveränderungen zwischen den Raupen 1, 2 stoßfrei ausgeglichen werden können. Bei der in Fig. 10 dargestellten Ausführungsform weist die Raupe 2 ebenfalls ein analog zur ersten Raupe 1 ausgebildetes Balancefahrwerk 140 mit drei Stufen auf.

Fig. 11 zeigt eine weitere bevorzugte Ausführungsform eines Seilbahnlaufwagens 10 mit Balancefahrwerken 40, 140, die in der ersten Raupe 1 bzw. der zweiten Raupe 2 integriert sind. Bei dieser Ausführungsform des Balancefahrwerks 40, 140 sind die jeweiligen Ausgleichbalken 41a bis 41g der zweiten und dritten Stufe symmetrisch um die Mittelachse des ersten Ausgleichbalkens 41a der ersten Stufe angeordnet. Die symmetrische Anordnung der Ausgleichbalken 41b bis 41g bzw. 41b' bis 41g' ist spiegelförmig um die Mittelachse des Ausgleichbalkens 41a ausgebildet. An den jeweiligen Enddrehpunkten 41d bis 41g' sind jeweils vier Laufrollen 45 angeordnet.

Bei der in den Fig. 10 und 11 dargestellten Ausführungsform des Seilbahnlaufwagens 10 kann jeweils der Abstand der Enddrehpunkte 43a bis 43g' der Ausgleichbalken 41a bis 41g zu den zentralen Drehpunkten 42a bis 42g in jeder Stufe unterschiedlich ausgebildet sein. Die Ausgleichbalken 41a bis 41n einer jeweiligen Stufe sind dabei besonders bevorzugt gleich ausgebildet und weisen gleiche Abstände der Enddrehpunkte 43a bis 43g' zu den zentralen Drehpunkten 42a bis 42g und gleiche Abmessungen der einzelnen Ausgleichbalken 41a bis 41g auf.

Fig. 12 zeigt eine Ausführungsform des erfindungsgemäßen Seilbahnlaufwagens 10 mit Balancefahrwerk beim Auffahren auf einen Seilsattel 200. Das Balancefahrwerk 40, 140 ermöglicht besonders beim Auffahren auf einen Seilsattel 200 den Ausgleich der Kraftverteilung über alle Laufrollen 45 bzw. 145, womit Stöße im Raupenlaufwerk 12, 22 abgemindert bzw. verhindert werden und die Lebensdauer der einzelnen Komponenten der Raupen 1, 2 deutlich erhöht wird. Weiters wird durch Verwendung eines Balancefahrwerks 40 eine stoßfreie Überfahrt über einen Seilsattel 200 ermöglicht.

In den Fig. 13 und 14 ist eine besonders bevorzugte Ausführungsform des erfindungsgemäßen Seilbahnlaufwagens 10 dargestellt. Der Seilbahnlaufwagen 10 umfasst je ein erfindungsgemäßes Balancefahrwerk 40, 140, das jeweils in den Raupen 1 und 2 integriert ist und einen erfindungsgemäßen Anpressmechanismus 5. Der Anpressmechanismus 5 umfasst zwei Federspannelemente 4a, 4b, die jeweils um einen Vorspannungszylinder 6a,6b konzentrisch angeordnet sind. Der Vorspannungszylinder 6a bzw. 6b verbindet das erste Rahmenteil 51 mit dem zweiten Rahmenteil 52 des Anpressmechanismus 5 und definiert somit die Anpresskraft der Raupen 1, 2 aneinander. Die Raupen 1, 2 sind an den Lagerstellen 51a bzw. 51b bzw. den Lagerzapfen 54a, 54b drehbar angeordnet. Weiters umfasst der Anpressmechanismus 5 des Seilbahnlaufwagen 10 zwei Anpresszylinder 7a, 7b, die mit den Vorspannungszylindern 6a, 6b bzw. Federspannelementen 4a, 4b die Anpresskraft der Raupen 1, 2 an das Tragseil 3 vorgeben.

Fig. 14 zeigt eine perspektivische Ansicht eines erfindungsgemäßen Seilbahnlaufwagens 10 gemäß Fig. 13. Die Raupenlaufwerke 12, 22 der Raupen 1, 2 werden jeweils durch einen Teilantrieb 30a, 30b angetrieben, wobei jeweils der Teilantrieb 30a, 30b der Raupenlaufwerke 12, 22 ein Ritzel bzw. eine Umlenkrolle des jeweiligen Raupenlaufwerks 12, 22 antreibt. Die Teilantriebe 30a, 30b umfassen weiters Bremsmechanismen 9a, 9b, die die jeweiligen Teilantriebe 30a, 30b bremsen können bzw. in einem Notfall den Seilbahnlaufwagen 10 zum Stillstand bringen.

Alternativ kann, wie in den Fig. 1, 2 und 10 bis 14 dargestellt, das Raupenlaufwerk 12, 22 der ersten Raupe 1 bzw. der zweiten Raupe 2 einen Spannzylinder 13 bzw. 23 umfassen, der die Raupenkette 11 bzw. die Raupenkette 21 der Raupen 1, 2 spannt. Die Spannzylinder 13, 23 können dabei ebenfalls an dem gleichen Hydrauliksystem mit den Vorspannungszylindern 6a, 6b bzw. dem Vorspannungszylinder 6 und/oder dem Anpresszylinder 7 bzw. den Anpresszylindern 7a, 7b angeschlossen sein und proportional mit der Antriebsleistung mit einem steigenden Versorgungsdruck versorgt werden.

In Fig. 15 und 16 ist eine erfindungsgemäße Personengondel zum Transport von Personen an einem Tragseil 3 dargestellt. Die Personengondel 100 umfasst zwei Seilbahnlaufwägen 10a, 10b, die hintereinander an dem Tragseil 3 angeordnet sind. Die Personengondel 100 ist über eine Aufhängung 60 mit den Seilbahnlaufwagen 10a, 10b verbunden und jeweils mit dem ersten Teil des jeweiligen Seilbahnlaufwagens 10a, 10b über ein Drehgelenk 61a, 61b verbunden, wodurch eine Lageänderung der Personengondel 100 in Schwerkraftrichtung ermöglicht wird, sodass die Personengondel 100 immer in Schwerkraftrichtung ausgerichtet wird. Die Seilbahnlaufwagen 10a, 10b können dabei wie in den Fig. 1 bis 14 dargestellt ausbildet sein.

Ein weiterer Aspekt der vorliegenden Erfindung ist es, geeignete Seilsattel 200 für eine Überfahrt von erfindungsgemäßen Seilbahnlaufwagen 10 bereitzustellen. Eine Ausführungsform eines erfindungsgemäßen Seilsattels 200 ist in den Fig. 17 bis 19 dargestellt. Der Seilsattel 200 weist eine Aufhängung 201 auf, die als L-förmiger Kragarm ausgebildet ist. Die Aufhängung 201 weist einen ersten Teil 201a und einen zweiten Teil 201b auf, wobei der erste Teil 201a eine längere Abmessung als der zweite Teil 201b aufweist. An dem zweiten Teil 201b sind zwei Verbindungselemente 202a, 202b angeordnet, die zur Anbringung an einer Seilstütze oder an anderen Stützelementen dienen. An dem ersten Teil 201a der Aufhängung 201 ist eine Seilauflage 203 angeordnet, die zur Aufhängung 201 in der Mitte verschwenkbar bzw. drehbar gelagert ist. Die Seilauflage 203 weist eine längliche Seilauflagefläche 204 auf, auf der ein Tragseil 3 aufgelegt werden kann. Die Seilauflage 204 wird dabei durch eine Anzahl von Blattfedern 205 gebildet, die nebeneinander angeordnet und zueinander in Richtung der Seilauflagefläche 204 elastisch verformbar sind. Die Blattfedern 205 weisen die gleiche Länge auf und sind gestaffelt nebeneinander an der Seilauflage 203 angeordnet.

Wie in Fig. 19 gezeigt können die Blattfedern 205 bzw. die Seilauflagefläche 204 Seileinfassungen 206 aufweisen, in die das Seil bzw. Tragseil 3 eingelegt wird. Die Seileinfassungen 206 können eine Lageveränderung bzw. ein Verrutschen des Tragseils 3 besser verhindern. Die Seilauflagefläche 204 ist durch eine leicht gekrümmte Anordnung der Blattfedern 205 zueinander in einem Bogen ausgebildet (Fig. 17), wobei der Winkel α der Krümmung an die Gegebenheiten des Seilverlaufs bzw. des Verlaufs eines Tragseils 3 angepasst werden kann.

Weiters ist vorgesehen, dass ein erfindungsgemäßer Seilbahnlaufwagen 10 bzw. zwei oder mehrere erfindungsgemäße Seilbahnlaufwägen 10a, 10b in einem Seilkran zum Transport von Ladegut an einem Tragseil 3 integriert sind, wobei der Seilkran insbesondere an den Seilbahnlaufwägen 10a, 10b aufgehängt ist.

Ein weiterer Aspekt der Erfindung ist eine Anordnung zum Transport von Gütern oder Personen entlang eines Tragseils 3, wobei die Anordnung einen Seilsattel 200 oder mehrerer Seilsättel 200 umfasst, die entsprechend der erfindungsgemäßen Seilsättel 200, wie in den Fig. 15 bis 17 beispielhaft beschrieben, ausgebildet sind und die an der jeweiligen Aufhängung 201 über die Verbindungselemente 202a, 202b an den Stützen befestigt sind. Die erfindungsgemäße Anordnung umfasst weiters ein Tragseil 3, das auf der Seilauflagefläche 204 des Seilsattels 200 aufliegt und an dem eine Personengondel 100 oder ein Seilkran, die einen erfindungsgemäßen Seilbahnlaufwagen 10, wie in den Fig. 1 bis 14 in beispielhaften Ausführungsformen beschrieben, umfasst. Das Tragseil 3 ist dabei zwischen den gegenüberliegenden Kettengliedern 111, 211 der Raupenketten 11, 21 bzw. den Raupenketten 11, 21 mehrerer Seilbahnlaufwägen 10a, 10b eingebracht. Die Personengondeln 100 bzw. Seilkräne sind entlang des Tragseils 3 durch Teilantriebe 30a, 30b bewegbar, womit in den Personengondeln 100 oder den Seilkränen befindliche Personen oder Ladegüter entlang des Tragseils 3 transportiert werden können.

In den beschriebenen Ausführungsformen können der Antrieb 30 bzw. die Teilantriebe 30a, 30b Verbrennungsmotoren, Elektromotoren oder Hydraulikmotoren umfassen.

Alternativ zu einer bemannten bzw. führergesteuerten Fahrt des Seilbahnlaufwagens 10, der Personengondel oder des Seilkrans kann der Antrieb 30, das Hydrauliksystem und/oder der Steuerblock automatisch oder über eine Funksteuerung steuerbar sein, womit sich der Seilbahnlaufwagen 10 am Tragseil 3 bemannt oder unbemannt fortbewegen kann.

Weiters können der Vorspannungszylinder 6 bzw. die Vorspannungszylinder 6a, 6b über einen intelligenten Steuerblock angesteuert werden. Dazu können der Vorspannungszylinder 6 bzw. die Vorspannungszylinder 6a, 6b an elektrische Druckregelventile angeschlossen sein oder umfassen, die den Druck im Vorspannungszylinder 6 bzw. den Vorspannungszylinder 6a, 6b regeln und an die Bewegungsbedingungen des Seilbahnlaufwagens 10 anpassen. Vorzugsweise können je ein elektrischer Sensor pro Raupe 1, 2 vorgesehenen sein, die den jeweiligen Schlupf mittels einer Software zwischen den Raupen 1, 2 bzw. den Seilbahnlaufwagen 10a, 10b vergleichen und mittels eines Programmfilters auswerten. Diese zusätzlichen elektrischen und hydraulischen Komponenten ermöglichen es den Anpressdruck des Seilbahnlaufwagens 10 bzw. die Seilbahnlaufwagen 10a, 10b kurzfristig bei zu hohem Schlupfunterschied der beiden Raupen 1, 2 eigenständig zu erhöhen.

## Patentansprüche

1. Seilbahnlaufwagen zum Transport von Gütern oder Personen, wobei der Seilbahnlaufwagen (10) zwei sich gegenüberliegende in einer Ebene, insbesondere übereinander, angeordnete Raupen (1, 2) umfasst, wobei die Raupen (1, 2) in einem Abstand zueinander angeordnet sind, wobei die Raupen (1, 2) jeweils eine Raupenkette (11, 21) und eine Anzahl von aneinandergereihten Kettengliedern (111, 211) aufweisen, wobei die Kettenglieder (111, 211) die jeweilige Raupenkette (11, 21) bilden, wobei zwischen den gegenüberliegenden Raupen (1, 2) an den sich gegenüberliegenden Kettengliedern (111, 211) der Raupenketten (11, 21) ein Tragseil (3) einbringbar ist,
**wobei** ein Anpressmechanismus (5) vorgesehen ist, der die Raupen (1, 2) miteinander verbindet, wobei der Abstand zwischen den Raupen (1, 2) mit dem Anpressmechanismus (5) verstellbar ist, wobei die Anpresskraft der beiden Raupen (1, 2) zueinander und/oder die Anpresskraft der beiden Raupen (1, 2) an ein Tragseil (3) mit dem Anpressmechanismus (5) einstellbar ist, wobei die Raupenketten (11, 21) mittels eines Antriebs (30) über ein Raupenlaufwerk (12, 22) in einer umlaufenden Bewegung angetrieben werden und wobei der Seilbahnlaufwagen (10) entlang eines Tragseils (3) verstellbar ist,
**dadurch gekennzeichnet, dass** der Anpressmechanismus (5) zumindest ein Federspannelement (4) umfasst, das die beiden Raupen (1,2) in Richtung zueinander vorspannt, und dass der Anpressmechanismus (5) zumindest einen Vorspannungszylinder (6) umfasst, der der Kraftwirkung des Federspannelements (4) entgegenwirkt.

2. Seilbahnlaufwagen nach Anspruch 1, **dadurch gekennzeichnet, dass** der Anpressmechanismus (5) einen ersten Rahmenteil (51) und einen zweiten Rahmenteil (52) aufweist, wobei der erste Rahmenteil (51) und/oder der zweite Rahmenteil (52) entlang einer Mittelachse (8) verstellbar sind, wobei die erste Raupe (1), insbesondere an einer ersten Lagerstelle (51a), an dem ersten Rahmenteil (51) und die zweite Raupe (2), insbesondere an einer zweiten Lagerstelle (51b), an dem zweiten Rahmenteil (52), insbesondere zueinander verschwenkbar, angeordnet sind und dass das Federspannelement (4) die beiden Raupen (1,2) in Richtung zueinander über den ersten Rahmenteil (51) und den zweiten Rahmenteil (52) vorspnnt.

3. Seilbahnlaufwagen nach einem der vorangehenden Ansprüche, **dadurch gekennzeichnet, dass** der Anpressmechanismus (5) zumindest einen Anpresszylinder (7) umfasst, mit dem die Raupen (1, 2) mit einem vorgegebenen Druck aneinander andrückbar sind, wobei vorzugsweise der Anpresszylinder (7) zwischen dem ersten Rahmenteil (51) und dem zweiten Rahmenteil (52), diese verbindend angeordnet ist und dass der Anpresszylinder (7) und der Vorspannungszylinder (6) jeweils mit einem Hydrauliksystem, insbesondere dem selben Hydrauliksystem mit gleichem Versorgungsdruck im gesamten Hydrauliksystem, verbunden sind, wobei der Anpresszylinder (7) und der Vorspannungszylinder (6) derart ausgebildet und angeordnet sind, dass die Kraftwirkung des Anpresszylinders (7) und die Kraftwirkung des Vorspannungszylinders (6), insbesondere bis 90 bar Versorgungsdruck, entgegngesetzt gleich groß auf den Anpressmechanismus (5) wirken und einander aufheben.

4. Seilbahnlaufwagen nach einem der vorangehenden Ansprüche, **dadurch gekennzeichnet, dass** der Druck im Vorspannungszylinder (6) proportional zur Leistung des Antriebs (30), vorzugsweise durch einen Druckkregeler, regelbar ist, wobei bei Beginn der Bewegung des Seilbahnlaufwagens (10) entlang eines Tragseils (3) im Vorspannungszylinder (6) ein Fahrdruck anliegt, und dass die Kraftwirkung des Vorspannungszylinders (6) bei Vorliegen des Fahrdrucks, insbesondere von 90 bar, die Kraftwirkung des Federspannelements (4) aufhebt, und/oder
dass die Kraftwirkung des Vorspannungszylinders (6), insbesondere durch einen mechanischen Anschlag oder den maximalen Hub des Vorspannungszylinders (6), begrenzt ist, wobei insbesondere eine Erhöhung der Kraftwirkung des Vorspannungszylinders (6) bei Vorliegen des Fahrdrucks unterbindbar ist.

5. Seilbahnlaufwagen nach einem der vorangehenden Ansprüche, **dadurch gekennzeichnet, dass** der Seilbahnlaufwagen (10) zwei Federspannelemente (4a, 4b), zwei Vorspannungszylinder (6a, 6b) und zwei Anpresszylinder (7a, 7b) aufweist, die insbesondere in den Anpressmechanismus (5) integriert sind, wobei vorzugsweise die Federspannelemente (4a, 4b), die Vorspannungszylinder (6a, 6b) und die Anpresszylinder (7a, 7b) jeweils symmetrisch um die Mittelachse (8), insbesondere auf einer Längsseite der Raupen (1, 2), an dem Seilbahnlaufwagen (10) angeordnet sind und/oder dass jede Raupe (1, 2) zumindest einen Spannzylinder (13, 23) umfasst, der die jeweilige Raupenkette (11, 21) spannt und insbesondere parallel zu den einander gegenüberliegenden Kettengliedern (111, 211) der Raupenketten (11, 21) angeordnet ist.

6. Seilbahnlaufwagen nach einem der vorangehenden Ansprüche, **dadurch gekennzeichnet, dass** der Vorspannungszylinder (6), der Anpresszylinder (7) und/oder die Spannzylinder (13, 23) öldynamische Hydraulikzylinder sind und jeweils an einem Hydrauliksystem, insbesondere dem selben Hydrauliksystem mit gleichem Versorgungsdruck im gesamten Hydrauliksystem, angeschlossen sind und/oder dass das Federspannelement (4) Tellerfedern umfasst, die insbesondere konzentrisch um den Vorspannungszylinder (6) herum angeordnet sind.

7. Seilbahnlaufwagen nach einem der vorangehenden Ansprüche, **dadurch gekennzeichnet, dass** der Versorgungsdruck des Vorspannungszylinder (6), des Anpresszylinders (7) und/oder der Spannzylinder (13, 23) proportional zur Leistung des Antriebs (30) geregelt ist, wobei insbesondere der Druck und Durchfluss im Hydrauliksystem durch den Antrieb (30) vorgebbar ist und der Antrieb (30) das Hydrauliksystem speist, und/oder
dass der Antrieb (30) der Raupen (1, 2) Verbrennungs- oder Elektromotoren umfasst.

8. Seilbahnlaufwagen nach einem der vorangehenden Ansprüche, **dadurch gekennzeichnet, dass** jede Raupe (1, 2) bzw. die Raupenketten (11, 21) jeweils direkt über Hydraulikmotoren angetrieben sind, wobei vorzugsweise die Hydraulikmotoren gleich ausgebildet sind und durch ein Hydrauliksystem gleich versorgt sind und/oder dass die Kettenglieder (111, 211) zumindest einen Teil des Querschnitts des Tragseils (3) aufnehmen, wobei insbesondere die Kettenglieder (111) der ersten Raupe (1) mehr als den halben Querschnitt des Tragseils (3) aufnehmen.

9. Seilbahnlaufwagen nach einem der vorangehenden Ansprüche, **dadurch gekennzeichnet, dass** der Vorspannungszylinder (6), der Anpresszylinder (7) und/oder die Spannzylinder (13, 23) mit einem intelligenten Steuerblock verbunden sind, wobei der Druck im Vorspannungszylinder (6) und/oder im Anpresszylinder (7) und/oder den Spannzylindern (13, 23), vorzugsweise mittels Druckregelventilen die an dem Vorspannungszylinder (6) und/oder dem Anpresszylinder (7) und/oder den Spannzylindern (13, 23) angeschlossen sind, veränderbar ist und dass bei einem durch den Steuerblock ermittelten Schlupf einer oder beider Raupen (1, 2) oder zwischen den Raupen (1, 2), der Druck im Vorspannungszylinder (6) und/oder im Anpresszylinder (7) und/oder in den Spannzylindern (13, 23) und/oder der durch den Anpressmechanismus (5) aufgebrachte Anpressdruck veränderbar ist.

10. Seilbahnlaufwagen nach einem der vorangehenden Ansprüche, **dadurch gekennzeichnet, dass** der Antrieb (30) einen Bremsmechanismus (9) aufweist, mit dem der Antrieb (30) bremsbar ist, wobei der Bremsmechanismus (9) vorzugsweise Tellerfedern umfasst und/oder
dass jede Raupe (1, 2) jeweils einen Antrieb (30a, 30b) umfasst, wobei der jeweilige Antrieb (30a, 30b) das jeweilige Raupenlaufwerk (12, 22) antreibt und vorzugsweise jeweils einen Bremsmechanismus (9a, 9b) aufweist und/oder
dass der Antrieb (30) über eine Funksteuerung steuerbar ist.

11. Seilbahnlaufwagen nach einem der vorangehenden Ansprüche, **dadurch gekennzeichnet, dass** an dem Seilbahnlaufwagen (10) eine Gondel zum Transport von Personen und/oder Ladegut angeordnet ist, wobei die Gondel insbesondere an einem Verbindungsarm (59) angelenkt ist, der vorzugsweise mit dem ersten Rahmenteil (51) des Anpressmechanismus (5) verbunden ist.

12. Seilbahnlaufwagen nach einem der vorangehenden Ansprüche, **dadurch gekennzeichnet, dass** zumindest ein Raupenlaufwerk (12, 22) ein Balancefahrwerk (40) zur gleichmäßigen Kraftverteilung im Raupenlaufwerk (12, 22) umfasst, wobei das Balancefahrwerk (40) eine Anzahl von kaskadenförmig in einer Anzahl von Stufen angeordneter Ausgleichsbalken (41a bis 41n) aufweist, die analog einer Balkenwaage ausgebildet sind, wobei jeder Ausgleichsbalken (41a bis 41n) einen zentralen Drehpunkt (42a bis 42n) und zwei jeweils im gleichen Abstand vom zentralen Drehpunkt (42a bis 42n), insbesondere nahe dem Ende jedes Augleichsbalkens (41a bis 41n), angeordnete Enddrehpunkte (43a bis 43n, 43a' bis 43n') aufweist, wobei der zentrale Drehpunkt (42a) des Ausgleichsbalkens (41a) der ersten Stufe an dem Anpressmechanismus (5), insbesondere um die erste Lagerstelle (51a) oder die zweite Lagerstelle (51b), verschwenkbar angeordnet ist, wobei jeweils an den Enddrehpunkten (43a bis 43n, 43a' bis 43n') der Augleichsbalken (41a bis 41n) jeder Stufe der zentrale Drehpunkt (42a bis 42n) eines benachbarten Augleichsbalkens (41b bis 41n) der nächsten Stufe verschwenkbar angeordnet ist, wobei die Augleichsbalken (41b, 41c) der zweiten Stufe jeweils mit ihren zentralen Drehpunkten (42b, 42c) an den Enddrehpunkten (43a, 43a') des Augleichsbalkens (41a) der ersten Stufe angeordnet sind, und an den Enddrehpunkten (43b, 43b' und 43c, 43c') der Augleichsbalken (41b, 41c) der zweiten Stufe jeweils ein Augleichsbalken (41d, 41e, 41f, 41g) der dritten Stufe mit deren zentralen Drehpunkten (42d, 42e, 42f, 42g) verschwenkbar angeordnet sind, usw., wobei an den Enddrehpunkten (43x bis 43n, und 43x' bis 43n') der Augleichsbalken (41x bis 41n) der letzten Stufe eine Anzahl von Laufrollen (45a bis 45n) angeordnet ist, wobei die Laufrollen (45a bis 45n) um die Enddrehpunkte (43x bis 43n, und 43x' bis 43n') der Augleichsbalken (41x bis 41n) der letzten Stufe drehbar gelagert sind und wobei die Laufrollen (45a bis 45n) an der jeweiligen Raupenkette (11, 21) an zumindest einem Kettenglied (111, 211) anlegbar sind.

13. Seilbahnlaufwagen nach Anspruch 12, **dadurch gekennzeichnet, dass** jeweils die Enddrehpunkte (43a bis 43n und 43a' bis 43n') der jeweiligen Ausgleichsbalken (41a bis 41n) einen Abstand entlang der Höhe zu den jeweiligen zentralen Drehpunkten (42a, bis 42n) desselben Ausgleichsbalkens (41a bis 41n) aufweisen, wobei die Verbindungslinien der Enddrehpunkte (43a bis 43n, und 43a' bis 43n') mit den jeweiligen zentralen Drehpunkten (42a bis 42n) eines Ausgleichsbalkens (41a bis 41n) ein gleichschenkliges Dreieck bilden, wobei insbesondere der Abstand der Enddrehpunkte (43a bis 43n und 43a' bis 43n') von den zentralen Drehpunkten (42a bis 42n) entlang der Höhe jedes Ausgleichbalkens (41a bis 41n) in den einzelnen Stufen gleich ist und/oder
dass das Balancefahrwerk (40) drei Stufen angeordneter Ausgleichsbalken (41a bis 41g) aufweist, wobei jeweils die Enddrehpunkte (43a bis 43g, und 43a' bis 43g') der jeweiligen Ausgleichsbalken (41a bis 41g) einen Abstand entlang der Höhe zu den jeweiligen zentralen Drehpunkten (42a, bis 42g) aufweisen, wobei die Verbindungslinien der Enddrehpunkte (43a bis 43g, und 43a' bis 43g') mit den jeweiligen zentralen Drehpunkten (42a, bis 42g) eines Ausgleichsbalkens (41a bis 41g) ein gleichschenkliges Dreieck bilden und/oder
dass an jedem Enddrehpunkt (43a bis 43n und 43a' bis 43n') jeder Stufe jeweils zwei Ausgleichsbalken (41a bis 41n, 41a bis 41n') verschwenkbar angeordnet sind, wobei die jeweiligen zwei Ausgleichsbalken (41a bis 41n, 41a bis 41n') jeweils symmetrisch auf einer Seite des Ausgleichsbalkens (41a bis 41n, 41a bis 41n') der vorherigen Stufe angeordnet sind.

14. Seilkran zum Transport von Ladegut an einem Tragseil (3), **dadurch gekennzeichnet, dass** der Seilkran zumindest einen, insbesondere zwei, Seilbahnlaufwagen (10) nach einem der Ansprüche 1 bis 13 umfasst, wobei der Seilkran insbesondere an zwei Seilbahnlaufwägen (10a, 10b) aufgehängt ist

15. Personen-Gondel zum Transport von Personen an einem Tragseil (3), **dadurch gekennzeichnet, dass** die Personen-Gondel zumindest einen, insbesondere zwei, Seilbahnlaufwagen (10) nach einem der Ansprüche 1 bis 13 umfasst, wobei die Personen-Gondel (100) insbesondere an zwei Seilbahnlaufwägen (10a, 10b) aufgehängt ist.

16. Seilsattel der mit einem Seilbahnlaufwagen (10) nach einem der Ansprüche 1 bis 13 überfahren werden kann, wobei der Seilsattel (200) eine Aufhängung (201) und zumindest ein an der Aufhängung (201) angeordnetes Verbindungselement (202) zur Anbringung an einer Stütze umfasst, **dadurch gekennzeichnet, dass** an der Aufhängung (201) eine Seilauflage (203) zur Auflage eines Tragseils (3) angeordnet ist, wobei die Seilauflage (203) eine längliche Seilauflagefläche (204) aufweist, auf der ein Tragseil (3) auflegbar ist, wobei die Seilauflagefläche (204) eine Anzahl elastisch, federnder Teilabschnitte aufweist und wobei die Teilabschnitte überwiegend normal zur Seilauflagefläche (204) elastisch verbiegbar sind.

17. Seilsattel nach Anspruch 16, **dadurch gekennzeichnet, dass** die Seilauflage (203) eine Anzahl von Blattfedern (205) umfasst, die nebeneinander angeordnet sind, wobei die Blattfedern (205) die Seilauflagefläche (204) bilden und zueinander elastisch verformbar sind und/oder
dass die Aufhängung (201) als L-förmiger Kragarm mit einem ersten Teil (201a) und einem zweiten Teil (201b) ausgebildet ist, wobei der erste Teil (201a) eine längere Abmessung als der zweite Teil (201b) aufweist, wobei das Verbindungselement (202) an dem zweiten Teil (201b) angeordnet ist und die Seilauflage (203) an dem ersten Teil (201b) drehbar gelagert angeordnet ist, und/oder
dass die Seilauflagefläche (204) eine gekrümmte Ebene bildet.

18. Anordnung zum Transport von Gütern oder Personen entlang eines Tragseils (3) umfassend einen Seilsattel (200) nach einem der Ansprüche 16 oder 17, wobei der Seilsattel (200), insbesondere an der Aufhängung (201), auf einer Stütze, befestigt ist, wobei die Anordnung ein auf der Seilauflagefläche (204) des Seilsattels (200) aufliegendes Tragseil (3) umfasst, wobei auf dem Tragseil (3) eine Personen-Gondel nach Anspruch 15 oder ein Seilkran nach Anspruch 14 befestigt ist und/oder zumindest ein Seilbahnlaufwagen (10) nach einem der Ansprüche 1 bis 13 derart auf dem Tragseil (3) angeordnet ist, dass das Tragseil (3) zwischen den gegenüberliegenden Kettengliedern (111, 211) der Raupenketten (11, 21) eingebracht ist.

## Claims

1. Cable car for transporting goods or passengers, wherein the cable car (10) comprises two crawlers (1, 2) which are arranged opposite each other in a plane, in particular one over the other, wherein the crawlers (1, 2) are arranged at a distance from each other, wherein each of the crawlers (1, 2) has a crawler chain (11, 21) and a plurality of chain links (111, 211) arranged next to one another, wherein the chain links (111, 211) form the respective crawler chain (11, 21), wherein a carrying cable (3) can be inserted between the opposing crawlers (1, 2) on the opposing chain links (111, 211) of the crawler chains (11, 21),
**wherein** a pressing mechanism (5) is provided which connects the crawlers (1, 2) together, wherein the distance between the crawlers (1, 2) can be adjusted using the pressing mechanism (5), wherein the contact pressing force of the two crawlers (1, 2) relative to each other and/or the contact pressing force of the two crawlers (1, 2) acting on a carrying cable (3) can be adjusted using the pressing mechanism (5), wherein the crawler chains (11, 21) are driven in a circulating movement by a drive (30) via a crawler running gear (12, 22), and wherein the cable car (10) can be moved along a carrying cable (3),
**characterised in that** the pressing mechanism (5) comprises at least one spring tensioning element (4) which biases the two crawlers (1, 2) towards each other, and **in that** the pressing mechanism (5) comprises at least one biasing cylinder (6) which counteracts the force effect of the spring tensioning element (4).

2. Cable car according to claim 1, **characterised in that** the pressing mechanism (5) has a first frame part (51) and a second frame part (52), wherein the first frame part (51) and/or the second frame part (52) are adjustable along a central axis (8), wherein the first crawler (1), in particular at a first bearing point (51a), is arranged on the first frame part (51) and the second crawler (2), in particular at a second bearing point (51b), is arranged on the second frame part (52), in particular so as to be pivotable relative to one another, and **in that** the spring tensioning element (4) biases the two crawlers (1, 2) towards each other via the first frame part (51) and the second frame part (52).

3. Cable car according to any of the preceding claims, **characterised in that** the pressing mechanism (5) comprises at least one pressure cylinder (7) by means of which the crawlers (1, 2) can be pressed against one another at a predetermined pressure, wherein the pressure cylinder (7) is preferably arranged between the first frame part (51) and the second frame part (52), connecting them, and **in that** the pressure cylinder (7) and the biasing cylinder (6) are each connected to a hydraulic system, in particular the same hydraulic system with the same supply pressure in the entire hydraulic system, wherein the pressure cylinder (7) and the biasing cylinder (6) are designed and arranged in such a way that the force effect of the pressure cylinder (7) and the force effect of the biasing cylinder (6), in particular up to 90 bar supply pressure, act on the pressing mechanism (5) in opposite directions with equal magnitude and cancel each other out.

4. Cable car according to any of the preceding claims, **characterised in that** the pressure in the biasing cylinder (6) can be regulated in proportion to the power of the drive (30), preferably by means of a pressure regulator, wherein at the start of the movement of the cable car (10) along a carrying cable (3) a travel pressure is applied in the biasing cylinder (6), and **in that** the force effect of the biasing cylinder (6) cancels out the force effect of the spring tensioning element (4) in the presence of the travel pressure, in particular of 90 bar, and/or
**in that** the force effect of the biasing cylinder (6) is limited, in particular by a mechanical stop or the maximum stroke of the biasing cylinder (6), wherein in particular an increase in the force effect of the biasing cylinder (6) can be suppressed in the presence of the travel pressure.

5. Cable car according to any of the preceding claims, **characterised in that** the cable car (10) has two spring tensioning elements (4a, 4b), two biasing cylinders (6a, 6b) and two pressure cylinders (7a, 7b), which are in particular integrated into the pressing mechanism (5), wherein preferably the spring tensioning elements (4a, 4b), the biasing cylinders (6a, 6b) and the pressure cylinders (7a, 7b) are each arranged symmetrically about the central axis (8), in particular on a longitudinal side of the crawlers (1, 2), on the cable car (10) and/or
**in that** each crawler (1, 2) comprises at least one clamping cylinder (13, 23) which clamps the respective crawler chain (11, 21) and is arranged in particular parallel to the mutually opposite chain links (111, 211) of the crawlers (11, 21).

6. Cable car according to any of the preceding claims, **characterised in that** the biasing cylinder (6), the pressure cylinder (7) and/or the clamping cylinders (13, 23) are oleo-dynamic hydraulic cylinders and are each connected to a hydraulic system, in particular the same hydraulic system with the same supply pressure in the entire hydraulic system and/or **in that** the spring tensioning element (4) comprises disc springs which are arranged in particular concentrically around the biasing cylinder (6).

7. Cable car according to any of the preceding claims, **characterised in that** the supply pressure of the biasing cylinder (6), the pressure cylinder (7) and/or the clamping cylinder (13, 23) is regulated in proportion to the power of the drive (30), wherein in particular the pressure and flow rate in the hydraulic system can be predetermined by the drive (30) and the drive (30) feeds the hydraulic system, and/or
**in that** the drive (30) of the crawlers (1, 2) comprises internal combustion engines or electric motors.

8. Cable car according to any of the preceding claims, **characterised in that** each crawler (1, 2) is driven or the crawler chains (11, 21) are each driven directly by hydraulic motors, wherein the hydraulic motors are preferably constructed identically and supplied identically by a hydraulic system and/or
**in that** the chain links (111, 211) take up at least a portion of the cross section of the carrying cable (3), wherein in particular the chain links (111) of the first crawler (1) take up more than half the cross section of the carrying cable (3).

9. Cable car according to any of the preceding claims, **characterised in that** the biasing cylinder (6), the pressure cylinder (7) and/or the clamping cylinders (13, 23) are connected to an intelligent control block, wherein the pressure in the biasing cylinder (6) and/or in the pressure cylinder (7) and/or in the clamping cylinders (13, 23) can be varied, preferably by means of pressure control valves which are connected to the biasing cylinder (6) and/or to the pressure cylinder (7) and/or to the clamping cylinders (13, 23), and that in the event of a slippage of one or both crawlers (1, 2) or between the crawlers (1, 2) being determined by the control block, the pressure in the biasing cylinder (6) and/or in the pressure cylinder (7) and/or in the clamping cylinders (13, 23) and/or the contact pressure applied by the pressing mechanism (5) can be varied.

10. Cable car according to any of the preceding claims, **characterised in that** the drive (30) has a braking mechanism (9) with which the drive (30) can be braked, wherein the braking mechanism (9) preferably comprises disc springs and/or
**in that** each crawler (1, 2) comprises a respective drive (30a, 30b), wherein the respective drive (30a, 30b) drives the respective crawler (12, 22) and preferably has a respective braking mechanism (9a, 9b) and/or
**in that** the drive (30) can be controlled via a radio control.

11. Cable car according to any of the preceding claims, **characterised in that** a gondola for transporting passengers and/or cargo is arranged on the cable car (10), wherein the gondola is in particular articulated on a connecting arm (59) which is preferably connected to the first frame part (51) of the pressing mechanism (5).

12. Cable car according to any of the preceding claims, **characterised in that** at least one crawler running gear (12, 22) comprises a balance trolley (40) for uniform distribution of force in the crawler running gear (12, 22), wherein the balance trolley (40) has a plurality of balance beams (41a to 41n) which are cascaded in a plurality of stages and are designed similarly to a beam balance, wherein each balance beam (41a to 41n) has a central pivot point (42a to 42n) and two end pivot points (43a to 43n, 43a' to 43n') each arranged equidistantly from the central pivot point (42a to 42n), in particular close to the end of each balance beam (41a to 41n), wherein the central pivot point (42a) of the balance beam (41a) of the first stage is arranged on the pressing mechanism (5), in particular so as to be pivotable about the first bearing point (51a) or the second bearing point (51b), wherein the central pivot point (42a to 42n) of an adjacent balance beam (41b to 41n) of the next stage is pivotably arranged on each of the end pivot points (43a to 43n, 43a' to 43n') of the balance beams (41a to 41n) of each stage, wherein the balance beams (41b, 41c) of the second stage are each arranged with their central pivot points (42b, 42c) on the end pivot points (43a, 43a') of the balance beam (41a) of the first stage, and a respective balance beam (41d, 41e, 41f, 41g) of the third stage is arranged so as to be pivotable with the central pivot points (42d, 42e, 42f, 42g) thereof on the end pivot points (43b, 43b' and 43c, 43c') of the balance beams (41b, 41c) of the second stage, and so on, wherein a plurality of rollers (45a to 45n) is arranged on the end pivot points (43x to 43n, and 43x' to 43n') of the balance beams (41x to 41n) of the last stage, wherein the rollers (45a to 45n) are rotatably mounted about the end pivot points (43x to 43n, and 43x' to 43n') of the balance beams (41x to 41n) of the last stage and wherein the rollers (45a to 45n) can be placed against the respective crawler chain (11, 21) on at least one chain link (111, 211).

13. Cable car according to claim 12, **characterised in that** the end pivot points (43a to 43n and 43a' to 43n') of each of the balance beams (41a to 41n) have a distance along the height from the respective central pivot points (42a to 42n) of the same balance beam (41a to 41n), wherein the connecting lines between the end pivot points (43a to 43n, and 43a' to 43n') and the respective central pivot points (42a to 42n) of a balance beam (41a to 41n) form an isosceles triangle, wherein in particular the distance between the end pivot points (43a to 43n and 43a' to 43n') and the central pivot points (42a to 42n) along the height of each balance beam (41a to 41n) is the same in the individual stages and/or
**in that** the balance trolley (40) comprises three stages of arranged balance beams (41a to 41g), wherein the end pivot points (43a to 43g, and 43a' to 43g') of the respective balance beams (41a to 41g) each have a distance along the height from the respective central pivot points (42a, to 42g), wherein the connecting lines between the end pivot points (43a to 43g, and 43a' to 43g') and the respective central pivot points (42a, to 42g) of a balance beam (41a to 41g) form an isosceles triangle and/or
**in that** two respective balance beams (41a to 41n, 41a to 41n') are pivotably arranged on each end pivot point (43a to 43n and 43a' to 43n') of each stage, wherein the respective two balance beams (41a to 41n, 41a to 41n') are each arranged symmetrically on one side of the balance beam (41a to 41n, 41a to 41n') of the previous stage.

14. Cable crane for transporting cargo on a carrying cable (3), **characterised in that** the cable crane comprises at least one, in particular two, cable cars (10) according to any of claims 1 to 13, wherein the cable crane is in particular suspended from two cable cars (10a, 10b).

15. Passenger gondola for transporting passengers on a carrying cable (3), **characterised in that** the passenger gondola comprises at least one, in particular two, cable cars (10) according to any of claims 1 to 13, wherein the passenger gondola (100) is in particular suspended from two cable cars (10a, 10b).

16. Cable saddle which can be traversed by a cable car (10) according to any of claims 1 to 13, wherein the cable saddle (200) comprises a suspension (201) and at least one connecting element (202) arranged on the suspension (201) for attachment to a support, **characterised in that** a cable support (203) for supporting a carrying cable (3) is arranged on the suspension (201), wherein the cable support (203) has an elongated cable support surface (204) on which a carrying cable (3) can be placed, wherein the cable support surface (204) has a plurality of elastically resilient subsections and wherein the subsections can be elastically bent predominantly normal to the cable support surface (204).

17. Cable saddle according to claim 16, **characterised in that** the cable support (203) comprises a plurality of leaf springs (205) arranged side by side, wherein the leaf springs (205) form the cable support surface (204) and are elastically deformable relative to one another and/or
**in that** the suspension (201) is formed as an L-shaped cantilever having a first part (201a) and a second part (201b), wherein the first part (201a) has a longer dimension than the second part (201b), wherein the connecting element (202) is arranged on the second part (201b) and the cable support (203) is rotatably mounted on the first part (201b) and/or
**in that** the cable support surface (204) forms a curved plane.

18. Arrangement for transporting goods or passengers along a carrying cable (3) comprising a cable saddle (200) according to any of claims 16 or 17, wherein the cable saddle (200) is fastened to a support, in particular by way of the suspension (201), wherein the arrangement comprises a carrying cable (3) resting on the cable support surface (204) of the cable saddle (200), wherein a passenger gondola according to claim 15 or a cable crane according to claim 14 is fastened to the carrying cable (3) and/or at least one cable car (10) according to any of claims 1 to 13 is arranged on the carrying cable (3) in such a way that the carrying cable (3) is inserted between the opposing chain links (111, 211) of the crawler chains (11, 21).

## Revendications

1. Chariot de téléphérique pour le transport de marchandises ou personnes, dans lequel le chariot de téléphérique (10) comprend deux chenilles (1, 2) agencées en s'opposant dans un plan, en particulier l'une au-dessus de l'autre, dans lequel les chenilles (1, 2) sont agencées à une distance l'une de l'autre, dans lequel les chenilles (1, 2) présentent respectivement une chaîne de patins (11, 21) et un nombre de maillons de chaîne (111, 211) juxtaposés, dans lequel les maillons de chaîne (111, 211) forment la chaîne de patins (11, 21) respective, dans lequel un câble porteur (3) peut être introduit entre les chenilles (1, 2) opposées au niveau des maillons de chaîne (111, 211) opposés des chaînes de patins (11, 21),
**dans lequel** un mécanisme de pression (5) est prévu, lequel relie les chenilles (1, 2) l'une à l'autre, dans lequel la distance entre les chenilles (1, 2) est réglable avec le mécanisme de pression (5), dans lequel la force de pression des deux chenilles (1, 2) est réglable l'une par rapport à l'autre et/ou la force de pression des deux chenilles (1, 2) est réglable au niveau d'un câble porteur (3) avec le mécanisme de pression (5), dans lequel les chaînes de patins (11, 21) sont entraînées au moyen d'un entraînement (30) par le biais d'un mécanisme de roulement de chenille (12, 22) dans un mouvement périphérique et dans lequel le chariot de téléphérique (10) est réglable le long d'un câble porteur (3),
**caractérisé en ce que** le mécanisme de pression (5) comprend au moins un élément de serrage de ressort (4) qui précontraint les deux chenilles (1, 2) en direction l'une de l'autre, et que le mécanisme de pression (5) comprend au moins un cylindre de précontrainte (6) qui agit contre l'action de force de l'élément de serrage de ressort (4).

2. Chariot de téléphérique selon la revendication 1, **caractérisé en ce que** le mécanisme de pression (5) présente une première partie de cadre (51) et une seconde partie de cadre (52), dans lequel la première partie de cadre (51) et/ou la seconde partie de cadre (52) sont réglables le long d'un axe médian (8), dans lequel la première chenille (1) est agencée, en particulier au niveau d'un premier point d'appui (51a), au niveau de la première partie de cadre (51) et la seconde chenille (2) est agencée, en particulier au niveau d'un second point d'appui (51b), au niveau de la seconde partie de cadre (52), en particulier de manière pivotante l'une par rapport à l'autre et **en ce que** l'élément de serrage de ressort (4) précontraint les deux chenilles (1, 2) en direction l'une de l'autre par le biais de la première partie de cadre (51) et de la seconde partie de cadre (52).

3. Chariot de téléphérique selon l'une quelconque des revendications précédentes, **caractérisé en ce que** le mécanisme de pression (5) comprend au moins un cylindre de pression (7), avec lequel les chenilles (1, 2) peuvent être pressées l'une contre l'autre avec une pression prédéfinie, dans lequel de préférence le cylindre de pression (7) est agencé entre la première partie de cadre (51) et la seconde partie de cadre (52), en les reliant et
**en ce que** le cylindre de pression (7) et le cylindre de précontrainte (6) sont reliés respectivement à un système hydraulique, en particulier le même système hydraulique avec la même pression d'alimentation dans le système hydraulique entier, dans lequel le cylindre de pression (7) et le cylindre de précontrainte (6) sont réalisés et agencés de telle manière que l'action de force du cylindre de pression (7) et l'action de force du cylindre de précontrainte (6), agissent, en particulier jusqu'à 90 bars de pression d'alimentation, de manière opposée et égale sur le mécanisme de pression (5) et s'annulent mutuellement.

4. Chariot de téléphérique selon l'une quelconque des revendications précédentes, **caractérisé en ce que** la pression dans le cylindre de précontrainte (6) est régulable de manière proportionnelle à la puissance de l'entraînement (30), de préférence par un régulateur de pression, dans lequel une pression de roulement s'applique au début du mouvement du chariot de téléphérique (10) le long d'un câble porteur (3) dans le cylindre de précontrainte (6), et **en ce que** l'action de force du cylindre de précontrainte (6) en présence de la pression de roulement, en particulier de 90 bars, annule l'action de force de l'élément de serrage de ressort (4), et/ou
**en ce que** l'action de force du cylindre de précontrainte (6) est limitée, en particulier par une butée mécanique ou la course maximale du cylindre de précontrainte (6), dans lequel en particulier une augmentation de l'action de force du cylindre de précontrainte (6) peut être cessée en présence de la pression de roulement.

5. Chariot de téléphérique selon l'une quelconque des revendications précédentes, **caractérisé en ce que** le chariot de téléphérique (10) présente deux éléments de serrage de ressort (4a, 4b), deux cylindres de précontrainte (6a, 6b) et deux cylindres de pression (7a, 7b) qui sont intégrés en particulier dans le mécanisme de pression (5), dans lequel de préférence les éléments de serrage de ressort (4a, 4b), les cylindres de précontrainte (6a, 6b) et les cylindres de pression (7a, 7b) sont agencés respectivement de manière symétrique autour de l'axe médian (8), en particulier sur un côté longitudinal des chenilles (1, 2), au niveau du chariot de téléphérique (10) et/ou
**que** chaque chenille (1, 2) comprend au moins un cylindre de serrage (13, 23) qui serre la chaîne de patins (11, 21) respective et est agencé en particulier parallèlement aux maillons de chaîne (111, 211) opposés l'un à l'autre des chaînes de patins (11, 21).

6. Chariot de téléphérique selon l'une quelconque des revendications précédentes, **caractérisé en ce que** le cylindre de précontrainte (6), le cylindre de pression (7) et/ou les cylindres de serrage (13, 23) sont des cylindres hydrauliques oléodynamiques et sont raccordés respectivement à un système hydraulique, en particulier au même système hydraulique avec la même pression d'alimentation dans le système hydraulique entier et/ou
**en ce que** l'élément de serrage de ressort (4) comprend des rondelles-ressort qui sont agencées en particulier de manière concentrique autour du cylindre de précontrainte (6).

7. Chariot de téléphérique selon l'une quelconque des revendications précédentes, **caractérisé en ce que** la pression d'alimentation du cylindre de précontrainte (6), du cylindre de pression (7) et/ou des cylindres de serrage (13, 23) est régulée de manière proportionnelle à la puissance de l'entraînement (30), dans lequel en particulier la pression et le débit dans le système hydraulique peuvent être prédéfinis par l'entraînement (30) et l'entraînement (30) alimente le système hydraulique, et/ou
**en ce que** l'entraînement (30) des chenilles (1, 2) comprend des moteurs à combustion interne ou électriques.

8. Chariot de téléphérique selon l'une quelconque des revendications précédentes, **caractérisé en ce que** chaque chenille (1, 2) ou les chaînes de patins (11, 21) sont entraînées respectivement directement par le biais de moteurs hydrauliques, dans lequel de préférence les moteurs hydrauliques sont réalisés de manière identique et sont alimentés de manière identique par un système hydraulique et/ou
**en ce que** les maillons de chaîne (111, 211) reçoivent au moins une partie de la section transversale du câble porteur (3), dans lequel en particulier les maillons de chaîne (111) de la première chenille (1) reçoivent plus de la moitié de la section transversale du câble porteur (3).

9. Chariot de téléphérique selon l'une quelconque des revendications précédentes, **caractérisé en ce que** le cylindre de précontrainte (6), le cylindre de pression (7) et/ou les cylindres de serrage (13, 23) sont reliés à un bloc de commande intelligent, dans lequel la pression dans le cylindre de précontrainte (6) et/ou dans le cylindre de pression (7) et/ou les cylindres de serrage (13, 23), est modifiable de préférence au moyen de régulateurs de pression qui sont raccordés au cylindre de précontrainte (6) et/ou au cylindre de pression (7) et/ou aux cylindres de serrage (13, 23) et que pour un patinage déterminé par le bloc de commande d'une ou des deux chenilles (1, 2) ou entre les chenilles (1, 2), la pression dans le cylindre de précontrainte (6) et/ou dans le cylindre de pression (7) et/ou dans les cylindres de serrage (13, 23) et/ou la pression de contact appliquée par le mécanisme de pression (5) est modifiable.

10. Chariot de téléphérique selon l'une quelconque des revendications précédentes, **caractérisé en ce que** l'entraînement (30) présente un mécanisme de freinage (9), avec lequel l'entraînement (30) peut être freiné, dans lequel le mécanisme de freinage (9) comprend de préférence des rondelles-ressort et/ou
**en ce que** chaque chenille (1, 2) comprend respectivement un entraînement (30a, 30b), dans lequel l'entraînement (30a, 30b) respectif entraîne le mécanisme de roulement de chenilles (12, 22) respectif et présente de préférence respectivement un mécanisme de freinage (9a, 9b) et/ou
**en ce que** l'entraînement (30) est commandable par le biais d'une commande radio.

11. Chariot de téléphérique selon l'une quelconque des revendications précédentes, **caractérisé en ce qu'**une nacelle est agencée au niveau du chariot de téléphérique (10) pour le transport de personnes et/ou de marchandises chargées, dans lequel la nacelle est articulée en particulier à un bras de liaison (59) qui est de préférence relié à la première partie de cadre (51) du mécanisme de pression (5).

12. Chariot de téléphérique selon l'une quelconque des revendications précédentes, **caractérisé en ce qu'**au moins un mécanisme de roulement de chenilles (12, 22) comprend un châssis d'équilibre (40) pour la répartition de force uniforme dans le mécanisme de roulement de chenilles (12, 22), dans lequel le châssis d'équilibre (40) présente un nombre de barres de compensation (41a à 41n) agencées en cascade dans un nombre de gradins qui sont réalisées de manière analogue à une balance romaine, dans lequel chaque barre de compensation (41a à 41n) présente un point de rotation central (42a à 42n) et deux points de rotation finaux (43a à 43n, 43a' à 43n') agencés respectivement à la même distance du point de rotation central (42a à 42n), en particulier près de l'extrémité de chaque barre de compensation (41a à 41n), dans lequel le point de rotation central (42a) de la barre de compensation (41a) du premier gradin est agencé de manière pivotante au niveau du mécanisme de pression (5), en particulier autour du premier point d'appui (51a) ou du second point d'appui (51b), dans lequel respectivement au niveau des points de rotation finaux (43a à 43n, 43a' à 43n') des barres de compensation (41a à 41n) de chaque gradin le point de rotation central (42a à 42n) d'une barre de compensation (41b à 41n) contiguë du gradin suivant est agencé de manière pivotante, dans lequel les barres de compensation (41b, 41c) du deuxième gradin sont agencées respectivement avec leurs points de rotation centraux (42b, 42c) au niveau des points de rotation finaux (43a, 43a') de la barre de compensation (41a) du premier gradin, et au niveau des points de rotation finaux (43b, 43b' et 43c, 43c') des barres de compensation (41b, 41c) du deuxième gradin respectivement une barre de compensation (41d, 41e, 41f, 41g) du troisième gradin est agencée de manière pivotante avec ses points de rotation centraux (42d, 42e, 42f, 42g), etc., dans lequel au niveau des points de rotation finaux (43x à 43n, et 43x' à 43n') des barres de compensation (41x à 41n) du dernier gradin un nombre de galets de roulement (45a à 45n) est agencé, dans lequel les galets de roulement (45a à 45n) sont logés de manière à pouvoir tourner autour des points de rotation finaux (43x à 43n, et 43x' à 43n') des barres de compensation (41x à 41n) du dernier gradin et dans lequel les galets de roulement (45a à 45n) peuvent être placés au niveau de la chaîne de patins (11, 21) respective au niveau d'au moins un maillon de chaîne (111, 211).

13. Chariot de téléphérique selon la revendication 12, **caractérisé en ce que** respectivement les points de rotation finaux (43a à 43n et 43a' à 43n') des barres de compensation (41a à 41n) respectives présentent une distance le long de la hauteur aux points de rotation centraux (42a, à 42n) respectifs de la même barre de compensation (41a à 41n), dans lequel les lignes de liaison des points de rotation finaux (43a à 43n, et 43a' à 43n') forment avec les points de rotation centraux (42a à 42n) respectifs d'une barre de compensation (41a à 41n) un triangle isocèle, dans lequel en particulier la distance des points de rotation finaux (43a à 43n et 43a' à 43n') des points de rotation centraux (42a à 42n) le long de la hauteur de chaque barre de compensation (41a à 41n) est identique dans les gradins individuels et/ou
**en ce que** le châssis d'équilibre (40) présente trois gradins de barres de compensation (41a à 41g) agencées, dans lequel respectivement les points de rotation finaux (43a à 43g, et 43a' à 43g') des barres de compensation (41a à 41g) respectives présentent une distance le long de la hauteur aux points de rotation centraux (42a, à 42g) respectifs, dans lequel les lignes de liaison des points de rotation finaux (43a à 43g, et 43a' à 43g') avec les points de rotation centraux (42a, à 42g) respectifs d'une barre de compensation (41a à 41g) forment un triangle isocèle et/ou
**en ce qu'**au niveau de chaque point de rotation final (43a à 43n et 43a' à 43n') de chaque gradin respectivement deux barres de compensation (41a à 41n, 41a à 41n') sont agencées de manière pivotante, dans lequel les deux barres de compensation (41a à 41n, 41a à 41n') respectives sont agencées respectivement de manière symétrique sur un côté de la barre de compensation (41a à 41n, 41a à 41n') du gradin précédent.

14. Grue à câble pour le transport de marchandises chargées au niveau d'un câble porteur (3), **caractérisée en ce que** la grue à câble comprend au moins un, en particulier deux, chariots de téléphérique (10) selon l'une quelconque des revendications 1 à 13, dans laquelle la grue à câble est suspendue en particulier à deux chariots de téléphérique (10a, 10b).

15. Nacelle de personnes pour le transport de personnes au niveau d'un câble porteur (3), **caractérisé en ce que** la nacelle de personnes comprend au moins un, en particulier deux, chariots de téléphérique (10) selon l'une quelconque des revendications 1 à 13, dans laquelle la nacelle de personnes (100) est suspendue en particulier aux deux chariots de téléphérique (10a, 10b).

16. Sabot de câble qui peut être franchi avec un chariot de téléphérique (10) selon l'une quelconque des revendications 1 à 13, dans laquelle le sabot de câble (200) comprend une suspension (201) et au moins un élément de liaison (202) agencé au niveau de la suspension (201) pour le montage sur un support, **caractérisé en ce qu'**au niveau de la suspension (201) un appui de câble (203) est agencé pour l'appui d'un câble porteur (3), dans lequel l'appui de câble (203) présente une surface d'appui de câble (204) oblongue, sur laquelle un câble porteur (3) peut être placé, dans lequel la surface d'appui de câble (204) présente un nombre de sections partielles à ressort, élastiques et dans lequel les sections partielles sont déformables élastiquement principalement de manière normale à la surface d'appui de câble (204).

17. Sabot de câble selon la revendication 16, **caractérisé en ce que** l'appui de câble (203) comprend un nombre de ressorts à lames (205) qui sont agencés l'un à côté de l'autre, dans lequel les ressorts à lames (205) forment la surface d'appui de câble (204) et sont déformables de manière élastique les uns par rapport aux autres et/ou
**en ce que** la suspension (201) est réalisée comme bras en porte-à-faux en forme de L avec une première partie (201a) et une seconde partie (201b), dans lequel la première partie (201a) présente une dimension plus longue que la seconde partie (201b), dans lequel l'élément de liaison (202) est agencé au niveau de la seconde partie (201b) et l'appui de câble (203) est agencé en étant logé de manière à pouvoir tourner au niveau de la première partie (201b), et/ou
**en ce que** la surface d'appui de câble (204) forme un plan incurvé.

18. Agencement de transport de marchandises ou de personnes le long d'un câble porteur (3) comprenant un sabot de câble (200) selon l'une quelconque des revendications 16 ou 17, dans lequel le sabot de câble (200), en particulier au niveau de la suspension (201), est fixé à un support, dans lequel l'agencement comprend un câble porteur (3) reposant sur la surface d'appui de câble (204) du sabot de câble (200), dans lequel une nacelle de personnes selon la revendication 15 ou une grue à câble selon la revendication 14 est fixée sur le câble porteur (3) et/ou au moins un chariot de téléphérique (10) selon l'une quelconque des revendications 1 à 13 est agencé sur le câble porteur (3) de telle manière que le câble porteur (3) soit introduit entre les maillons de chaîne (111, 211) opposés des chaînes de patins (11, 21).
